# EUROPEAN PATENT APPLICATION

(11) **EP 4 572 170 A1**
(43) Date of publication of application: **18.06.2025**
(21) Application number: 22955055.3
(22) Date of filing: 12.08.2022
(51) Int. Cl.: H04B 7/06, H04B 7/024, H04B 7/08, H04L 27/26

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/030828
(87) International publication number: WO 2024/034141

(57) **Abstract**

A terminal according to one aspect of the present disclosure includes: a receiving section that receives first downlink control information (DCI) to be used for beam indication and second DCI to schedule or trigger a downlink (DL) signal; and a control section that judges one or a plurality of TCI states to apply to the DL signal from a plurality of Transmission Configuration Indication (TCI) states indicated by the first DCI and judges whether the DL signal is a signal to use one transmission/reception point (TRP) or a signal to use a plurality of TRPs, based on a specific field included in the second DCI. According to one aspect of the present disclosure, it is possible to appropriately determine QCL assumption/TCI state(s).

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation).

It is also studied to indicate a TCI state(s) applicable to a plurality of kinds of signals (channels/reference signals) by downlink control information. However, the relationship between the number of indicated TCI states and signals to which the indicated TCI states are applied is not clear. Unless such a relationship is clear, degradation in communication quality, throughput reduction, and the like may occur.

Thus, an object of the present disclosure is to provide a terminal, a radio communication method, and a base station that can appropriately determine QCL assumption/TCI state(s).

### Solution to Problem

A terminal according to one aspect of the present disclosure includes: a receiving section that receives first downlink control information (DCI) to be used for beam indication and second DCI to schedule or trigger a downlink (DL) signal; and a control section that judges one or a plurality of TCI states to apply to the DL signal from a plurality of Transmission Configuration Indication (TCI) states indicated by the first DCI and judges whether the DL signal is a signal to use one transmission/reception point (TRP) or a signal to use a plurality of TRPs, based on a specific field included in the second DCI.

### Advantageous Effects of Invention

According to one aspect of the present disclosure, it is possible to appropriately determine QCL assumption/TCI state(s).

### Brief Description of Drawings

[FIG. 1] FIGS. 1A and 1B are diagrams to show examples of a unified/common TCI framework.
[FIG. 2] FIGS. 2A and 2B are diagrams to show examples of DCI based TCI state indication.
[FIG. 3] FIG. 3 shows an example of application time of unified TCI state indication.
[FIG. 4] FIG. 4A and FIG. 4B are diagrams to show an example of association between PUCCH resources/resource groups and indicated TCI states.
[FIG. 5] FIG. 5A to FIG. 5C are diagrams to show examples of application of indicated TCI states according to a first embodiment.
[FIG. 6] FIG. 6A and FIG. 6B are diagrams to show an example of application of indicated TCI states according to embodiment 1-1.
[FIG. 7] FIG. 7A and FIG. 7B are diagrams to show an example of application of indicated TCI states according to a variation of embodiment 1-1.
[FIG. 8] FIG. 8 is a diagram to show an example of information related to a TCI state(s) indicated by scheduling DCI and the number/order of the indicated TCI states.
[FIG. 9] FIG. 9 is a diagram to show an example of indication of TCI states according to embodiment 1-2-1.
[FIG. 10] FIG. 10 is a diagram to show an example of indication of TCI states according to embodiment 1-2-2.
[FIG. 11] FIG. 11 is a diagram to show another example of the indication of TCI states according to embodiment 1-2-2.
[FIG. 12] FIG. 12 is a diagram to show an example of indication of a TCI state(s) according to embodiment 1-3.
[FIG. 13] FIG. 13 is a diagram to show examples of a field in DCI according to embodiment 1-4.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.
[FIG. 18] FIG. 18 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be used interchangeably with sQCL (spatial QCL).

For the QCL, a plurality of types (QCL types) may be defined. For example, four QCL types A to D may be provided, which have a different parameter(s) (or a parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### {Physical Layer Procedure for Data/Antenna Port QCL}

A UE can be configured with a list of up to M TCI-state configurations in a higher layer parameter PDSCH-Config for decoding of a PDSCH, according to a detected PDCCH with DCI targeting the UE itself and a given serving cell. Here, M depends on UE capability maxNumberConfiguredTCIstatesPerCC.

Each TCI-State includes a parameter for configuration of a QCL relationship between one or two downlink reference signals and a DMRS port for PDSCH, a DMRS port for PDCCH, or a CSI-RS port for CSI-RS resource. The QCL relationship is configured by a higher layer parameter qcl-Type1 for a first DL RS and a higher layer parameter qcl-Type2 for a second DL RS (if configured).

In a case with two DL RSs, a plurality of QCL types are not the same irrespective of whether reference is reference to the same DL RS or reference to different DL RSs. A QCL type corresponding to each DL RS is given by a higher layer parameter qcl-Type in QCL-Info and takes one of the following values.
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

### {RRC Protocol Specification/RRC IE/TCI State}

TCI-State (TCI state) associates one or two DL reference signals (RSs) with a corresponding QCL type(s). If an additional physical cell identifier (PCI) is configured for the RS, the same value is configured for both of the DL RSs.

### (Unified/common TCI Framework)

With a unified TCI framework, a plurality of kinds of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) to be applied to a UL channel(s)/RS(s) and the number M (≥ 1) of TCI states (DL TCI states) to be applied to a DL channel(s)/RS(s) may be defined. At least one of N and M may be notified/configured/indicated to a UE by higher layer signaling/physical layer signaling.

In the present disclosure, when it is described as N = M = X (where X is any integer), this may mean that X TCI state(s) (corresponding to X TRP(s)) common to UL and DL (joint TCI state(s)) is notified/configured/indicated to a UE. When it is described as N = X (where X is any integer) and M = Y (where Y is any integer, Y may be equal to X (Y = X)), this may mean that X UL TCI state(s) (corresponding to X TRP(s)) and Y DL TCI state(s) (corresponding to Y TRP(s)) (i.e., separate TCI states) are notified/configured/indicated to a UE.

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that a plurality of (two) TCI states common to UL and DL for a plurality of (two) TRPs are notified/configured/indicated to a UE (joint TCI states for a plurality of TRPs).

For example, when it is described as N = 2 and M = 2, this may mean that a plurality of (two) UL TCI states and a plurality of (two) DL TCI states for a plurality of (two) TRPs are notified/configured/indicated to a UE (separate TCI states for a plurality of TRPs).

Note that, in the above examples, cases where the values of N and M are each one or two have been described, but the values of N and M may each be three or more, and N and M may be different from each other.

In Rel. 17, it is studied to support N = M = 1. In Rel. 18 or later versions, it is studied to support other cases.

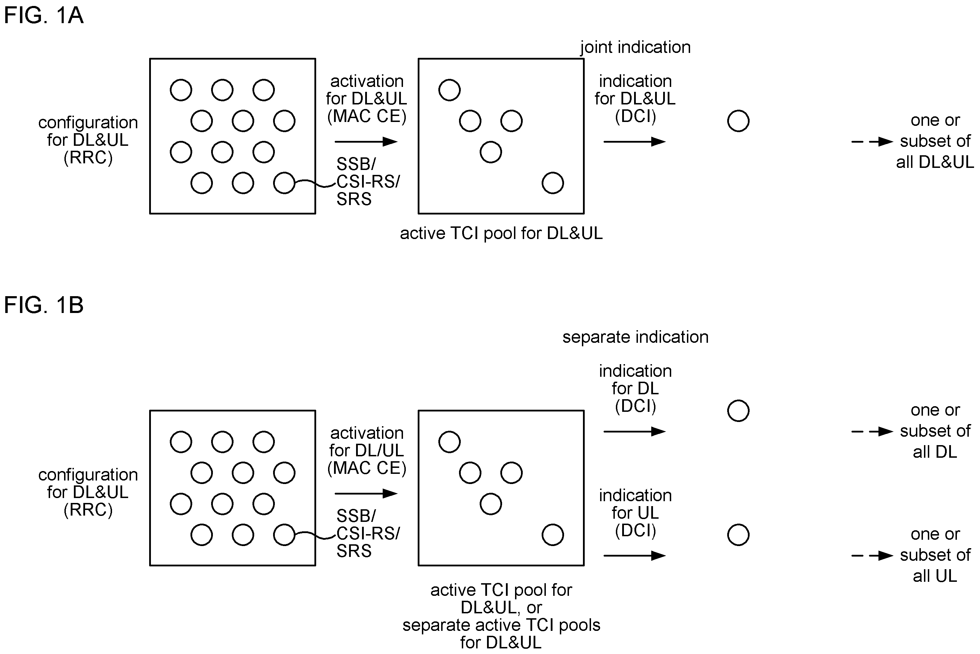

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. Single DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different DCIs may indicate a UL TCI and a DL DCI separately.

In Rel-17 NR or later versions, it is assumed that activation/indication of a beam to a TCI state associated with a different physical cell identifier (PCI) by a MAC CE/DCI is supported. In Rel-18 NR or later versions, it is assumed that indication of change of a serving cell to a cell having a different PCI by a MAC CE/DCI is supported.

### {Physical Layer Procedure for Data/Antenna Port QCL}

To provide a reference signal for a DMRS for PDSCH and a DMRS for PDCCH in a certain CC and a CSI-RS, and further to provide reference for determination of a UL TCI filter if a UL TX (transmission) spatial filter for dynamic grant and configured grant based PUSCH and PUCCH resources and an SRS in a certain CC is available, a UE can be configured with a list of up to 128 DLorJointTCIState (DL or joint TCI state) configurations in PDSCH-Config (PDSCH configuration).

If no DLorJointTCIState or UL-TCIState (UL TCI state) configuration is present in a BWP in the CC, the UE can apply a DLorJointTCIState or UL-TCIState configuration from a reference BWP in a reference CC. If the UE is configured with DLorJointTCIState or UL-TCIState in any in a CC list in the same band, it is not assumed that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that, when the UE is configured with TCI-State in any CC of the CCs by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command to be used to map up to eight TCI states and/or pairs of TCI states with one TCI state for DL channel/signal and one TCI state for UL channel/signal to a DCI field 'Transmission Configuration Indication (TCI) codepoint' for one CC/DL BWP or a set of CCs/DL BWPs if available. When a set of TCI state IDs is activated for the set of CCs/DL BWPs, and further for one of the CCs/DL BWPs if available, the same set of TCI state IDs is applied to all the DL and/or UL BWPs in an indicated CC. Here, an applicable-CC list may be determined by the CC indicated in the activation command. If the activation command maps DLorJointTCIState and/or UL-TCIState to only one TCI code point, the UE applies DLorJointTCIState and/or UL-TCIState to the one CC/DL BWP or the set of CCs/DL BWPs, and applies, if indicated mapping for a single TCI codepoint is applied, indicated DLorJointTCIState and/or UL-TCIState to the one CC/DL BWP or the set of CCs/DL BWPs.

When bwp-id or cell for a QCL type A/D source RS in QCL-Info of a TCI state configured with DLorJointTCIState is not configured, the UE assumes that the QCL type A/D source RS is configured in a CC/DL BWP to which the TCI state is applied.

### (Indication of TCI State)

A Rel-17 unified TCI framework supports modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

A UE with an Rel-17 TCI state configured with a TCI state ID (for example, tci-StateId_r17) and activated receives DCI format 1_1/1_2 providing an indicated TCI state with a Rel-17 TCI state ID for one CC or receives DCI format 1_1/1_2 providing an indicated TCI state with a Rel-17 TCI state ID for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be with DL assignment if available but need not be with DL assignment.

If DCI format 1_1/1_2 is not with DL assignment, the UE can assume (validate) the following for the DCI.
- A CS-RNTI is used for CRC scrambling for DCI.
- The values of the following DCI fields (special fields) are set as follows:
   - A redundancy version (RV) field is set at all '1's.
   - A modulation and coding scheme (MCS) field is set at all '1's.
   - A new data indicator (NDI) field is set at 0.
   - A frequency domain resource assignment (FDRA) field is set at all '0's for FDRA type 0, set at all '1's for FDRA type 1, or set at all '0's for dynamic switch (DynamicSwitch) (similarly to validation of a PDCCH in a release of DL semi-persistent scheduling (SPS) or UL grant type 2 scheduling).

Note that DCI in mode 2/mode 3 above may be referred to as beam indication DCI.

In Rel. 15/16, if a UE does not support active BWP change via DCI, the UE ignores a BWP indicator field. Similar operation is studied also for the relationship between supporting of a Rel-17 TCI state and interpretation of a TCI field. It is studied that a TCI field is always present in DCI format 1_1/1_2 if a UE is configured with a Rel-17 TCI state and that the UE ignores the TCI field if the UE does not support TCI update via DCI.

In Rel. 15/16, whether or not a TCI filed is present (TCI presence in DCI information, tci-PresentInDCI) is configured for each CORESET.

A TCI field in DCI format 1_1 corresponds to 0 bits when the higher layer parameter tci-PresentInDCI is not enabled while corresponding to 3 bits otherwise. If a BWP indicator field indicates a BWP other than an active BWP, a UE follows the following operation.
{Operation} If the higher layer parameter tci-PresentInDCI is not enabled for a CORESET to be used for a PDCCH communicating DCI format 1_1, the UE assumes that tci-PresentInDCI is not enabled for all the CORESETs in the indicated BWP, and assumes that tci-PresentInDCI is enabled for all the CORESETs in the indicated BWP otherwise.

A TCI field in DCI format 1_2 corresponds to 0 bits when a higher layer parameter tci-PresentInDCI-1-2 is not configured while corresponding to 1, 2, or 3 bits determined by the higher layer parameter tci-PresentInDCI-1-2 otherwise. If a BWP indicator field indicates a BWP other than an active BWP, a UE follows the following operation.
{Operation} If the higher layer parameter tci-PresentInDCI-1-2 is not configured for a CORESET to be used for a PDCCH communicating DCI format 1_2, the UE assumes that tci-PresentInDCI is not enabled for all the CORESETs in the indicated BWP, and assumes that tci-PresentInDCI-1-2 is configured with the same value as that of tci-PresentInDCI-1-2 configured for the CORESET to be used for the PDCCH communicating DCI format 1_2, for all the CORESETs in the indicated BWP, otherwise.

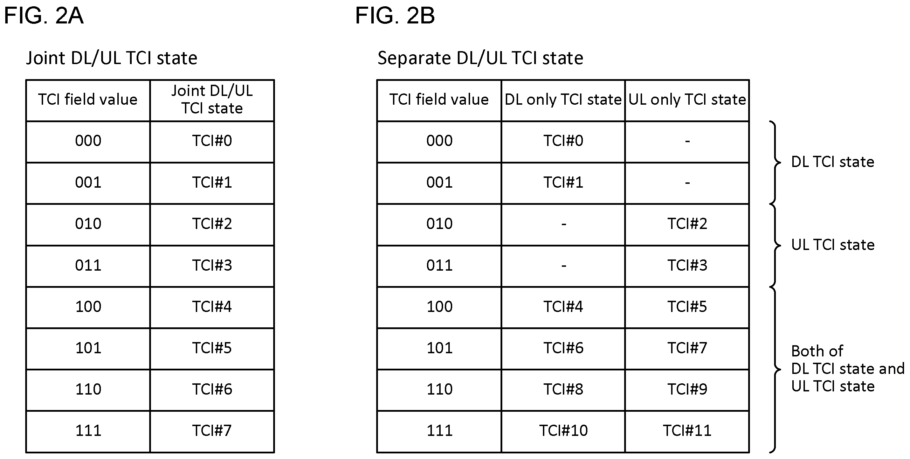

FIG. 2A is a diagram to show an example of DCI based joint DL/UL TCI state indication. With each value of a TCI field for joint DL/UL TCI state indication, a TCI state ID indicating a joint DL/UL TCI state is associated.

FIG. 2B is a diagram to show an example of DCI based separate DL/UL TCI state indication. With each value of a TCI field for separate DL/UL TCI state indication, at least one TCI state ID of a TCI state ID indicating a TCI state of only DL and a TCI state ID indicating a TCI state of only UL is associated. In this example, values 000 and 001 of the TCI field are each associated only with one TCI state ID for DL, values 010 and 011 of the TCI field are each associated only with one TCI state ID for UL, and values 100 to 111 of the TCI field are each associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of kinds of signals (channels/RSs), and a TCI state for a plurality of kinds of signals (channels/RSs) may be interchangeably interpreted.

An indicated Rel-17 TCI state may be shared with at least one of UE-specific reception in a PDSCH/PDCCH (updated by using Rel-17 DCI/MAC CE/RRC), a dynamic grant (DCI)/configured grant PUSCH, and a plurality of (for example, all the) dedicated PUCCH resources. A TCI state indicated by DCI/MAC CE/RRC may be referred to as an indicated TCI state and a unified TCI state.

For a Rel-17 TCI state, a TCI state other than a unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a specific kind of signal (channel/RS) may be interchangeably interpreted.

A configured Rel-17 TCI state need not be shared with at least one of UE-specific reception in a PDSCH/PDCCH (updated by using Rel-17 DCI/MAC CE/RRC), a dynamic grant (DCI)/configured grant PUSCH, and a plurality of (for example, all the) dedicated PUCCH resources. A configured Rel-17 TCI state may be configured by RRC/MAC CE for each CORESET/resource/resource set, and the indicated Rel-17 TCI state (common TCI state) described above may be configured to be updated, but the configured Rel-17 TCI state may be configured not to be updated.

For a UE-specific channel/signal (RS), it is studied to apply such an indicated Rel-17 TCI state. For a non-UE specific channel/signal, it is studied that a UE is notified of which one of an indicated Rel-17 TCI state and a configured Rel-17 TCI state is to be applied by using higher layer signaling (RRC signaling).

It is studied that an RRC parameter related to a configured Rel-17 TCI state (TCI state ID) has the same configuration as that of an RRC parameter of a TCI state in Rel. 15/16. It is studied that a configured Rel-17 TCI state is configured/indicated by using RRC/MAC CE for each CORESET/resource/resource set. It is studied that a UE judges the configuration/indication, based on a specific parameter.

It is studied that update of an indicated TCI state and update of a configured TCI state are performed separately for a UE. For example, for a UE, when a unified TCI state for an indicated TCI state is updated, update of a configured TCI state need not be performed. It is studied that the UE judges the update, based on a specific parameter.

It is also studied to switch, for a PDCCH/PDSCH, between an indicated Rel-17 TCI state being applied and an indicated Rel-17 TCI state being not applied (configured Rel-17 TCI state being applied or a TCI state configured separately from the indicated Rel-17 TCI state being applied) by using higher layer signaling (RRC/MAC CE).

It is also studied that an indicated Rel-17 TCI state is supported for a UE-specific CORESET and a PDSCH related to the CORESET and a non-UE specific CORESET and a PDSCH related to the CORESET, for intra-cell beam indication (indication of a TCI state).

It is also studied that an indicated Rel-17 TCI state is supported for a UE-specific CORESET and a PDSCH related to the CORESET, for inter-cell beam indication (for example, L1/L2 inter-cell mobility).

In Rel. 15, whether to indicate a TCI state to CORESET #0 depends on implementation of a base station. In Rel. 15, for CORESET #0 indicated with a TCI state, the indicated TCI state is applied. CORESET #0 not indicated with a TCI state may be QCLed with an SSB selected at the time of the latest (most recent) PRACH transmission.

A TCI state related to CORESET #0 is studied in unified TCI state frameworks of Rel. 17 or later versions.

For example, in a unified TCI state framework of Rel. 17 or later versions, whether an indicated Rel-17 TCI state associated with the serving cell is applied for Rel-17 TCI state indication of CORESET #0 may be configured by RRC for each CORESET, and a legacy MAC CE/RACH signalling mechanism may be used when the indicated Rel-17 TCI state is not applied.

Note that a CSI-RS related to a Rel-17 TCI state applied to CORESET #0 may be QCLed with an SSB related to a serving cell PCI (physical cell ID) (similarly to Rel. 15).

Whether or not to follow an indicated Rel-17 TCI state may be configured for each CORESET by an RRC parameter for CORESET #0, a CORESET with a common search space, and a CORESET with a CSS and a UE-specific search space (USS). When following of an indicated Rel-17 TCI state is not configured for the CORESET, a configured Rel-17 TCI state may be applied to the CORESET.

Whether or not to follow an indicated Rel-17 TCI state may be configured for a non-UE-dedicated channel/RS (excluding a CORESET) by an RRC parameter for each channel/resource/resource set. When following of an indicated Rel-17 TCI state is not configured for the channel/resource/resource set, a configured Rel-17 TCI state may be applied to the channel/resource/resource set.

### (beam application time (BAT))

For DCI-based beam indication in Rel, 17, studies 1 and 2 below are studied for application time of indication of a beam/unified TCI state (condition for beam application time (BAT))) .

### {Study 1}

It is studied that the first slot to which an indicated TCI is applied is at least Y symbols after the last symbol of acknowledgement (ACK) for joint/separate DL/UL beam indication. It is studied that the first slot to which an indicated TCI is applied is at least Y symbols after the last symbol of ACK/negative acknowledgement (NACK) for joint or separate DL/UL beam indication. The Y symbols may be configured by a base station, based on UE capability reported by a UE. The UE capability may be reported in units of symbol.

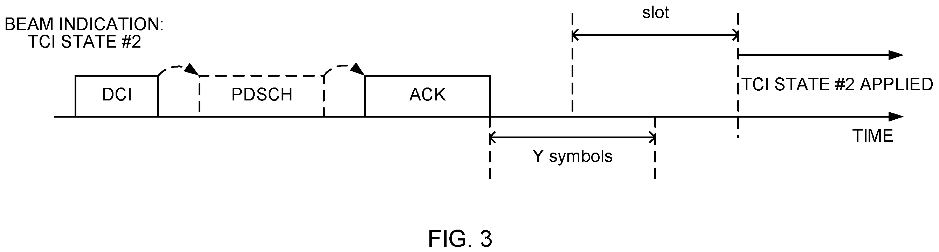

In the example in FIG. 3, ACK may be ACK for a PDSCH scheduled by beam indication DCI. In this example, no PDSCH may be transmitted. ACK in this case may be ACK for beam indication DCI.

It is studied that at least one of Y symbols is configured for a UE for each BWP/CC, for DCI based beam indication of Rel. 17.

When SCS is different between a plurality of CCs, values of Y symbols are also different, and hence application time may be different among the plurality of CCs.

### {Study 2}

For a case of CA, application timing/BAT of the beam indication may follow any of options 1 to 3 below.
{Option 1} Both the first slot and the Y symbols are determined on a carrier with the smallest SCS of one or more carries to be applied with the beam indication.
{Option 2} Both the first slot and the Y symbols are determined on a carrier with the smallest SCS of one or more carriers to be applied with the beam indication and a UL carrier carrying the ACK.
{Option 3} Both the first slot and the Y symbols are determined on a UL carrier carrying the ACK.

As a CC simultaneous beam update function of Rel. 17, use of a beam in common between a plurality of CCs in CA is studied. According to study 2, application time is commonly used between the plurality of CCs.

The application time (Y symbols) of beam indication for CA may be determined on a carrier with the smallest SCS of the carriers to which the beam indication is applied. MAC CE based beam indication of Rel. 17 (when only a single TCI code point is activated) may follow Rel-16 application time line of MAC CE activation.

Based on these studies, it is studied to define the following operation in a specification.

### {Operation}

When a UE transmits the last symbol of a PUCCH with HARQ-ACK information corresponding to DCI communicating TCI state indication, application of an indicated TCI state with a Rel-17 TCI state may be initiated from the first slot at least Y symbols after the last symbol of the PUCCH. Y may correspond to a higher layer parameter (for example, BeamAppTime_r17 [symbol]). Both the first slot and the Y symbols may be determined on a carrier with the smallest SCS of carries to be applied with the beam indication. The UE may assume one indicated TCI state with a Rel-17 TCI state for DL and UL or may assume one indicated TCI state with a Rel-17 TCI state for UL (separately from DL), at a certain time point.

X [ms] may be used instead of Y [symbol].

Regarding application time, it is studied that a UE reports at least one of UE capabilities 1 and 2 below.

### {UE Capability 1}

The shortest application time per SCS (the smallest value of the Y symbols between the last symbol of a PUCCH carrying ACK and the first slot to which the beam is applied).

### {UE Capability 2}

The smallest time gap between the last symbol of a beam indication PDCCH (DCI) and the first slot to which the beam is applied. The gap between the last symbol of a beam indication PDCCH (DCI) and the first slot to which the beam is applied may satisfy the UE capability (the smallest time gap).

UE capability 2 may be existing UE capability (for example, timeDurationForQCL).

The relationship between indication of a beam and a channel/RS to which the beam is applied may satisfy at least one of UE capabilities 1 and **2.**

Regarding the application time, it is conceivable that a parameter (for example, BeamAppTimer17) configured by the base station may be an optional field.

### (Intra-cell/inter-cell Beam Indication/Management)

In Rel.-17 NR or later versions, it is assumed that beam indication to a TCI state associated with a different PCI by a MAC CE/DCI is supported. In Rel-18 NR or later versions, it is assumed that indication of change of a serving cell to a cell having a different PCI by a MAC CE/DCI is supported.

An indicated Rel-17 TCI state may be shared by (applied to) a UE-dedicated channel/RS and a non-UE-dedicated channel/RS in a cell.

The indicated Rel-17 TCI state may be shared only by (applied only to) UE-dedicated channels/RSs between cells.

Whether or not to follow an indicated Rel-17 TCI state may be configured for a non-UE-dedicated channel/RS for each PDSCH (PDSCH configuration)/CORESET (CORESET configuration) by an RRC parameter between cells. The UE-dedicated channel/RS may always follow an indicated Rel-17 TCI state without following the RRC parameter.

In the present disclosure, a non-UE-dedicated CORESET may mean a CORESET with a CSS, and a UE-dedicated CORESET may mean a CORESET with a USS. In the present disclosure, a non-UE-dedicated PDSCH may mean a PDSCH scheduled by a CORESET with a CSS or mean a PDSCH scheduled by a CORESET with a CSS other than type 3 CSS. In the present disclosure, a UE-dedicated PDSCH may mean a PDSCH scheduled by a CORESET with a USS or mean a PDSCH scheduled by a CORESET with a USS or a type 3 CSS. For example, whether or not to follow an indicated Rel-17 TCI state may be configured by an RRC parameter (for example, followUnifiedTCIstate) for each PDSCH configuration (PDSCH-Config), and this configuration may be applied to a non-UE-dedicated PDSCH without being applied to a UE-dedicated PDSCH (with the UE-dedicated PDSCH always following a Rel-17 TCI state).

### (Channel/RS to which Indicated TCI State is Applied)

An indicated TCI state by a MAC CE/DCI may be applied to the following channels/RSs.

### {PDCCH}

- When followUnifiedTCIState (following a unified TCI state) is configured for CORESET 0, the indicated TCI state is applied. Otherwise, a Rel-15 specification is applied to the CORESET. In other words, CORESET 0 follows a TCI state activated by the MAC CE or is QCLed with an SSB.
- The indicated TCI state is always applied to a CORESET with a USS/CSS type 3 with an index other than **0.**
- When following a unified TCI state is configured for a CORESET at least with a CSS other than CSS type 3 with an index other than 0, the indicated TCI state is applied. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH scheduling the PDSCH), the indicated TCI state may be applied. Otherwise, a configured TCI state for the PDSCH is applied to the PDSCH. When followUnifiedTCIState is not configured for the PDSCH, whether the non-UE-dedicated PDSCH follows the indicated TCI state may be determined according to whether or not followUnifiedTCIState is configured for a CORESET used for scheduling of the PDSCH.

### {CSI-RS}

When followUnifiedTCIState is configured for an A-CSI-RS for CSI acquisition or beam management (for a CORESET of a PDCCH triggering the A-CSI-RS), the indicated TCI state is applied. For other CSI-RSs, a configured TCI state for the CSI-RS is applied.

### {PUCCH}

- The indicated TCI state is always applied to all the dedicated PUCCH resources.

### {PUSCH}

- The indicated TCI state is always applied to a dynamic/configured grant PUSCH.

### {SRS}

- When following a unified TCI state is configured for an SRS resource set for an A-SRS for the use of beam management and an A/SP/P-SRS for the use of codebook (CB)/non-codebook (NCB)/antenna switching, the indicated TCI state is applied. For other SRSs, a configured TCI state in the SRS resource set is applied.

### (Analysis)

In Rel. 18 and later versions, it is studied to switch single-TRP or multi-TRP configurations/operations according to the number of TCI states indicated by beam indication DCI.

Meanwhile, in Rel. 18, it is studied to support coherent joint transmission (CJT) using up to four TRPs. Joint transmission (JT) may mean simultaneous data transmission from a plurality of points (for example, TRPs) to a single UE.

Rel. 17 supports NCJT from two TRPs. PDSCHs from the two TRPs may be precoded independently and decoded independently. Frequency resources may be non-overlapping, partial-overlapping, or full-overlapping. When overlap occurs, the PDSCH from one of the TRPs may interfere with the PDSCH from the other TRP.

For CJT, data from four TRPs may be precoded coherently and transmitted to a UE in the same time-frequency resource. For example, in consideration of channels from the four TRPs, the same precoding matrix may be used. "Coherent" may mean that a certain relationship is present between phases of a plurality of received signals. By improving signal quality by using 4-TRP joint precoding, no interference may occur among the four TRPs. Data may be subjected only to interference other than the four TRPs.

It is conceivable that a UE notified of more than two TCI states by RRC/MAC CE/DCI when the number of indicated TCI states is more than two at maximum (for example, four at maximum per BWP/CC) for supporting of CJT cannot judge whether to perform single-TRP or multi-TRP operation.

In this case, it is conceivable that, when a larger number of indicated TCI states (equal to or larger) than a specific number are indicated, the UE judges to apply multi-TRP. For example, it is conceivable that the UE applies single-TRP operation when one indicated TCI state is indicated, and the UE applies multi-TRP operation when two or more indicated TCI states are indicated.

In multi-TRP of Rel. 16/17, single TRP and multi-TRP can be switched by scheduling DCI except for PDCCH repetition.

In single-DCI based multi-TRP NCJT/repetition defined in Rel. 16, single TRP and multi-TRP can be switched based on the number of TCI states indicated by a TCI field.

In multi-DCI based multi-TRP NCJT/repetition defined in Rel. 16, single TRP and multi-TRP can be switched based on whether or not a TCI state(s) indicated by DCI corresponding to each CORESET pool index is the same.

In single-DCI based multi-TRP PUSCH repetition defined in Rel. 17, for switching between single-TRP PUSCH repetition and multi-TRP PUSCH repetition, single TRP and multi-TRP can be switched based on an SRS resource set indicator field in DCI format 01/0_2**.**

In single-DCI based multi-TRP PUCCH repetition defined in Rel. 17, single TRP and multi-TRP can be switched by one or two spatial relations being activated for one PUCCH resource (resource group) and one PUCCH resource being selected by DCI (PUCCH resource indicator (PRI)/control channel element (CCE) index included in the DCI).

In PDCCH repetition defined in Rel. 17, there is no method of switching the number of active TCI states of one CORESET **(i.e.,** single TRP and multi-TRP) by DCI.

In view of these, it is desirable to perform switching between single TRP and multi-TRP by scheduling DCI also in operation related to a unified TCI state defined in Rel. 18 or later versions.

However, a method of switching the number of TRPs by DCI in operation related to a unified TCI state has not been studied sufficiently. Unless this study is sufficient, degradation in communication quality, throughput reduction, and the like may occur.

Thus, the inventors of the present invention came up with the idea of a method of being able to switch single TRP and multi-TRP also in operation related to a unified TCI state and appropriately determine QCL assumption/TCI state to apply to each channel/signal.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate (or **specify),"** "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, an indicated TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be used interchangeably with **"a** set of spatial relation information", "one or a plurality of spatial relation information", and the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, one of two TCI states associated with one codepoint of a TCI field may be interchangeably interpreted.

In the present disclosure, transmission/reception of a channel/signal using a single TRP and a TCI state (joint/separate/indicated TCI state) being equal in the transmission/reception of a channel/signal (for example, NCJT/CJT/repetition) or the number of TCI states (joint/separate/indicated TCI states) being one in the transmission/reception of a channel/signal (for example, NCJT/CJT/repetition) may be interchangeably interpreted.

Transmission/reception of a channel/signal using a single TRP and a TCI state (joint/separate/indicated TCI state) being different in the transmission/reception of a channel/signal (for example, NCJT/CJT/repetition) or the number of different TCI states (joint/separate/indicated TCI states) being more than one (for example two) in the transmission/reception of a channel/signal (for example, NCJT/CJT/repetition) may be interchangeably interpreted.

In the present disclosure, a single TRP, a single-TRP system, single-TRP transmission, and a single PDSCH may be interchangeably interpreted. In the present disclosure, multi-TRP (more than one TRP), a multi-TRP system, multi-TRP transmission, and multi-PDSCH may be interchangeably interpreted.

In the present disclosure, single DCI, a single PDCCH, single-DCI based multi-TRP, two TCI states in at least one TCI codepoint being activated, at least one codepoint of a TCI field being mapped to two TCI states, and a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of single-DCI based multi-TRP and multi-DCI based multi-TRP may be interchangeably interpreted.

In the present disclosure, multi-DCI based multi-TRP, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index = 0 or correspond to the first TCI state of two TCI states corresponding to one codepoint of a TCI field. TRP #2 (second TRP) TRP #1 (first TRP) may correspond to CORESET pool index = 1 or correspond to the second TCI state of the two TCI states corresponding to the one codepoint of the TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, beam indication DCI, a beam indication MAC CE, and beam indication DCI/MAC CE may be interchangeably interpreted. In other words, indication related to an indicated TCI state to a UE may be performed by using at least on of DCI and a MAC CE.

In the present disclosure, repetition, repetition transmission, and repetition reception may be interchangeably interpreted.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, application of a TCI state/QCL assumption to each channel/signal/resource may mean application of a TCI state/QCL assumption to transmission/reception of each channel/signal/resource.

In the present disclosure, a first TCI state may correspond to the first TRP. In the present disclosure, a second TCI state may correspond to the second TRP. In the present disclosure, an n-th first TCI state may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each embodiment of the present disclosure below, a method of targeting two TRPs (i.e., a case where at least one of N and M is 2) for application of a plurality of TCI states in transmission/reception using a plurality of TRPs will be mainly described. However, the number of TRPs may be three or more (more than one), and each embodiment may be applied to support the number of TRPs. In other words, at least one of N and M may be a number larger than two.

In the present disclosure, reception of a DL signal (PDSCH/PDCCH) using an SFN may mean reception of the same data (PDSCH)/control information (PDSCH) and/or by using the same time/frequency resource from a plurality of transmission/reception points. Reception of a DL signal using an SFN may mean reception of the same data/control information and/or by using the same time/frequency resource by using a plurality of TCI states/spatial domain filters/beams/QCLs.

### (Radio Communication Method)

### <0-th Embodiment>

In the present embodiment, mapping/association of an indicated TCI state for each channel will be described.

A UE may be indicated with y indicated TCI states by using beam indication DCI/MAC CE. The y may be 4 at maximum, a number larger than four at maximum, or a number smaller than four at maximum, for example.

The UE may select x indicated TCI state(s) from the y indicated TCI states to apply the x indicated TCI states to each channel/signal.

The UE may receive at least one of information related to x, information related to which x indicated TCI state(s) of the y indicated TCI states to apply, by using higher layer signaling (RRC/MAC CE)/DCI.

The x may be different depending on the kind of each channel/signal. The y may be different depending on the kind of each channel/signal or may be the same.

In a case of single-TRP operation, y may be a first value (for example, 1). For example, when y is 1, the UE may assume to perform unified TCI state operation defined in Rel. 17.

In a case of multi-TRP operation, y may be a second value (for example, 2). In a case of multi-TRP operation, y may be a third value (for example, 3). By y taking the third value in a case of multi-TRP operation, more flexible beam indication can be performed.

In a case of operation related to CJT, y may be the third value (for example, 4).

Note that, in each embodiment of the present disclosure, a joint TCI state will be described as a main example. However, each embodiment of the present disclosure is also applicable to a separate (UL/DL) TCI state as appropriate.

When y indicated TCI states are indicated for joint TCI states, 2y indicated TCI states may be indicated for separate (UL/DL) TCI states. For example, when four joint TCI states are indicated at maximum, four UL TCI states and four DL TCI states may be indicated at maximum (i.e., eight at maximum).

In the present disclosure, at least either joint TCI states or separate (UL/DL) TCI states may be configured/indicated by RRC/MAC CE/DCI in the same BWP/CC. In the present disclosure, both joint TCI states and separate (UL/DL) TCI states may be configured/indicated by RRC/MAC CE/DCI in the same BWP/CC.

### <<Single-DCI based multi-TRP PDCCH>>

For a UE, mapping/correspondence between configured/indicated TCI states (joint/DL TCI states) and CORESETs/CORESET groups may be configured.

The configuration may be configured by using higher layer signaling (RRC).

For each one CORESET, one or a plurality of (for example, two) indices for an indicated TCI state(s) (for example, first/second indicated TCI state) may be configured.

For a CORESET configured with following a unified TCI state (for example, followUnifiedTCIstate), x TCI state(s) selected from y indicated TCI states may be applied to the CORESET.

For example, the x for a CORESET not configured with a single frequency network (SFN) scheme (for example, SFN scheme A/B) may be a first value (for example, 1). For example, the x for a CORESET configured with an SFN scheme (for example, SFN scheme A/B) may be a second value (for example, 2).

### <<Single-DCI based multi-TRP PDSCH>>

When a single-DCI based multi-TRP PDSCH is configured, switching between a single-TRP PDSCH and a multi-TRP PDSCH by scheduling DCI may be supported.

x TCI state(s) selected from y indicated TCI states may be applied to a PDSCH.

For example, the x for a single-TRP PDSCH may be a first value (for example, 1). For example, the x for a multi-TRP PDSCH (for example, NCJT/repetition/SFN by single-DCI based multi-TRP) may be a second value (for example, 2).

### <<Single-DCI based multi-TRP PUCCH>>

When a multi-TRP PUCCH (repetition) is configured, switching between a single-TRP PUCCH (repetition) and a multi-TRP PUCCH (repetition) by scheduling DCI may be supported.

x TCI state(s) selected from y indicated TCI states may be applied to a PUCCH. The x may be indicated by scheduling DCI.

For example, the x for a single-TRP PUCCH (repetition) may be a first value (for example, 1). For example, the x for a multi-TRP PUCCH (repetition) may be a second value (for example, 2).

When a multi-TRP PUCCH (repetition) is not configured, one TCI state selected from the y indicated TCI states may be applied to a PUCCH.

The selection of one TCI state may be defined in a specification in advance or may be configured by higher layer signaling (RRC).

The TCI states of a PDSCH and a PUCCH related to the PDSCH may be the same or different from each other. For example, when two TCI states are required for a PDSCH and a PUCCH related to the PDSCH requires one TCI state, the UE may select two (x = 2) TCI states for the PDSCH/PUCCH and ignore the second TCI state for the

### PUCCH.

### <<Single-DCI based multi-TRP PUSCH>>

When multi-TRP PUSCH repetition (a plurality of (for example, two) CB/NCB SRS resource sets) is configured, switching between single-TRP PUSCH repetition and multi-TRP PUSCH repetition by a specific field in scheduling DCI may be supported.

The specific field may be an SRS resource set indicator field, for example. The scheduling DCI may be DCI format 0_1/0_2, for example.

x TCI state(s) selected from y indicated TCI states may be applied to a PUSCH. The x may be indicated by scheduling DCI.

For example, the x for a single-TRP PUSCH (repetition) may be a first value (for example, 1). For example, the x for a multi-TRP PUSCH (repetition) may be a second value (for example, 2).

When a multi-TRP PUSCH (repetition) is not configured, one TCI state selected from the y indicated TCI states may be applied to a PUSCH.

The selection of one TCI state may be defined in a specification in advance or may be configured by higher layer signaling (RRC).

### <<Multi-DCI based multi-TRP PDCCH>>

By using a specific field in DCI corresponding to the value of a CORESET pool index (CORESETPoolIndex) (DCI format 1_1/1_2 (with/without DL assignment)), an indicated TCI state(s) (joint/DL/UL TCI state(s)) corresponding to the same value of the CORESET pool index may be indicated.

For a CORESET pool index having a first value (for example, 0), y₁ indicated TCI states may be indicated. For a CORESET pool index having a second value (for example, 1), y₂ indicated TCI states may be indicated.

For a CORESET configured with a CORESET configured with the CORESET pool index having the first value, x TCI state(s) selected from the y₁ indicated TCI states may be applied to the CORESET.

For a CORESET configured with a CORESET configured with the CORESET pool index having the second value, x TCI state(s) selected from the y₂ indicated TCI states may be applied to the

### CORESET.

For example, the x for a CORESET not configured with an SFN scheme (for example, SFN scheme A/B) may be a first value (for example, 1). For example, the x for a CORESET configured with an SFN scheme (for example, SFN scheme A/B) may be a second value (for example, 2).

For each one CORESET, one or a plurality of (for example, two) indices for an indicated TCI state(s) (for example, first/second indicated TCI state) may be configured. The configuration may be configured by using higher layer signaling (RRC) .

### <<Numbers Related to Indicated TCI State(s)>>

The above x and the above y for each channel/signal will be described below in detail.

The above x may denote the number of TCI states to apply to each channel/signal among the above y (including y₁ and y₂) indicated TCI states.

The above x may be determined separately for each channel/signal to be applied to. It may be supported that the above x is different for each channel/signal to be applied to.

Among the y indicated TCI states, a TCI state(s) to be applied may be determined separately for each channel/signal to be applied to. It may be supported that a TCI state(s) to be applied is different for each channel/signal to be applied to among the y indicated TCI states.

Among the y indicated TCI states, a TCI state(s) to be applied may be determined separately for each resource/resource set/CORESET of each channel/signal to be applied to. It may be supported that a TCI state(s) to be applied may be different for each resource/resource set/CORESET of each channel/signal to be applied to, among the y indicated TCI states.

### {CSI-RS/TRS/SSB/SRS}

x for a specific reference signal (for example, CSI-RS/TRS/SSB/SRS) may be a specific value.

The specific value may be 1.

The specific value may be 2 or larger. For example, x may be 2 or larger in repetition of a specific reference signal using multi-TRP.

The type of the specific reference signal may be a specific type (for example, A/SP/P).

The specific reference signal may be limited to a CSI-RS/SRS.

The specific reference signal may be configured by higher layer signaling (RRC). For example, the specific reference signal may be a reference signal configured with a specific RRC parameter (for example, followUnifiedTCIstate).

The specific reference signal may be a reference signal with a specific usage/purpose. For example, the specific reference signal may be at least one of a CSI-RS with repetition, a CSI-RS without repetition, a CSI-RS with information of a tracking reference signal (trs-info), a CSI-RS for beam management, and an SRS with a usage of CB/NCB/beam management/antenna switching.

### {PDSCH}

x for a specific channel (for example, a PDSCH) may be a specific value.

The specific value may be 2 or larger (for example, 2), for example.

For example, the specific value may be 2 for a single-DCI based multi-TRP PDSCH (NCJT/repetition/SFN).

For example, when the specific value is 2, the UE may assume/judge to receive a single-DCI based multi-TRP PDSCH (NCJT/repetition/SFN).

The specific value may be 1, for example.

For example, the specific value may be 1 for at least one of a single-TRP PDSCH and a multi-DCI based multi-TRP PDSCH. The multi-DCI based multi-TRP PDSCH may correspond to a case where one indicated TCI state is indicated for each CORESET pool index.

For example, when the specific value is 1, the UE may assume/judge to receive at least one of a single-TRP PDSCH and a multi-DCI based multi-TRP PDSCH.

Note that, when a plurality of (for example, two) indicated TCI states are indicated for a CORESET pool index by single DCI, for the multi-DCI based TRP PDSCH, the above x may be 2.

### {PDCCH}

x for a specific channel (for example, a PDCCH) may be a specific value.

The specific value may be 2 or larger (for example, 2), for example.

For example, the specific value may be 2 for an SFN PDCCH (for example, a case where an SFN scheme (scheme A/B) is configured for a CORESET).

For example, when the specific value is 2, the UE may assume/judge to receive an SFN PDCCH.

The specific value may be 1, for example.

For example, the specific value may be 1 for a PDCCH other than an SFN PDCCH.

For example, when the specific value is 1, the UE may assume/judge to receive a PDCCH other than an SFN PDCCH.

x for a PDCCH may be determined/configured/indicated for each CORESET/search space. x for a PDCCH may be determined/configured/indicated for a plurality of (for example, all) CORESETs/search spaces in a certain BWP/CC.

### {PUCCH}

x for a specific channel (for example, a PUCCH) may be a specific value.

The specific value may be 2 or larger (for example, 2), for example.

For example, the specific value may be 2 for at least one of PUCCH repetition (for example, a case where cyclic/sequential hopping of a beam is configured) and a PUCCH of Simultaneous Transmission across multiple panels (ST × MP) (for example, frequency division multiplexing (FDM)/space division multiplexing (SDM)/SFN PUCCH repetition).

For example, when the specific value is 2, the UE may assume/judge to receive at least one of PUCCH repetition and an ST × MP PUCCH.

The specific value may be 1, for example.

For example, the specific value may be 1 for a PUCCH other than at least one of PUCCH repetition and an ST × MP PUCCH.

For example, when the specific value is 1, the UE may assume/judge to receive a PUCCH other than at least one of PUCCH repetition and an ST × MP PUCCH.

x for a PUCCH may be determined based on the usage of the PUCCH. For example, when a specific UCI (for example, an HARQ-ACK) is not included in a PUCCH, x for the PUCCH may be 1. For example, when a specific UCI (for example, an HARQ-ACK) is included in a PUCCH, x for the PUCCH may be 2.

x for a PUCCH may be determined based on a method of triggering the PUCCH. For example, when a PUCCH is not triggered by DCI, x for the PUCCH may be 1. For example, when a PUCCH is triggered by DCI (for example, in a case of a PUCCH transmitting an HARQ-ACK), x for the PUCCH may be 2.

x for a PUCCH may be determined/configured/indicated for each PUCCH resource/resource group in a BWP/CC.

x for a PUCCH may be determined/configured/indicated for a plurality of (for example, all) PUCCH resources/resource groups in a certain BWP/CC.

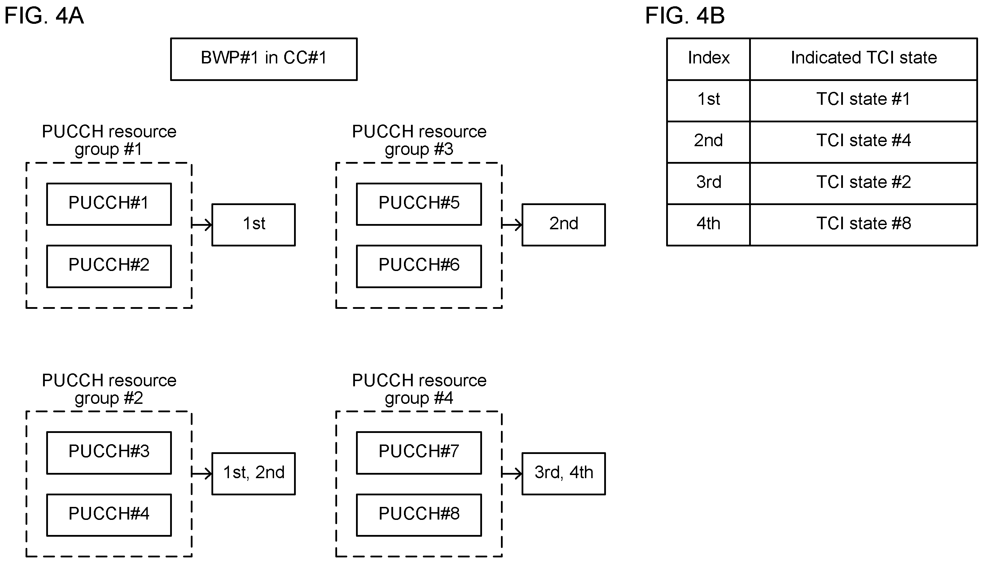

FIG. 4A and FIG. 4B are diagrams to show an example of association between PUCCH resources/resource groups and indicated TCI states. In the example shown in FIG. 4A, PUCCH resource groups (PUCCH resource groups #1 to #4) and PUCCH resources (PUCCH resources #1 to #8) are configured for a UE. These PUCCH resources/resource sets may be configured in a certain BWP (BWP #1) in a certain CC (CC #1). The correspondence between PUCCH resource groups and PUCCH resources is as shown in FIG. 4A.

FIG. 4B is a diagram to show association between four TCI states indicated by beam indication TCI states and indices corresponding to the respective TCI states.

As shown in FIG. 4A, an index is associated with each TCI state to be applied, for each PUCCH resource group. The UE may judge a TCI state(s) corresponding to each PUCCH and the number of TCI states, based on the associated indices and the TCI states corresponding to the indices shown in FIG. 4B.

In this way, by configuring/determining/indicating an index(es) of an indicated TCI state(s) on a per PUCCH resource/resource group, single-TRP operation and multi-TRP operation can be switched by (a PRI/CCE index field included in) scheduling DCI.

Configuration/indication/update of the index(es) of the indicated TCI state(s) on a per PUCCH resource/resource group may be performed by using higher layer signaling (RRC/MAC CE)/DCI (beam indication DCI).

Based on at least one of an indicated TCI state(s) to be applied to a PUCCH resource and the number (x) of the indicated TCI states, at least one of an indicated TCI state(s) to be applied to a PDSCH scheduled by the same DCI and the number (x) of the indicated TCI states may be determined.

Based on at least one of an indicated TCI state(s) to be applied to a PDSCH scheduled by the same DCI and the number (x) of the indicated TCI states, at least one of an indicated TCI state(s) to be applied to a PUCCH resource and the number (x) of the indicated TCI states may be determined.

### {PUSCH}

x for a specific channel (for example, a PUSCH) may be a specific value.

The specific value may be 2 or larger (for example, 2), for example.

For example, the specific value may be 2 for at least one of PUSCH repetition (for example, a case where a plurality of (for example, two) CB/NCB SRS resource sets are configured) and ST × MP PUSCH (for example, a case of transmitting frequency FDM/SDM/SFN PUSCH repetition and each layer of the PUSCH in different beams).

For example, when the specific value is 2, the UE may assume/judge to receive at least one of PUSCH repetition and an ST × MP PUSCH.

The specific value may be 1, for example.

For example, the specific value may be 1 for a PUSCH other than at least one of PUSCH repetition and an ST × MP PUSCH.

For example, when the specific value is 1, the UE may assume/judge to receive a PUSCH other than at least one of PUSCH repetition and an ST × MP PUSCH.

A PUSCH in the present embodiment may be at least one of a configured grant PUSCH and a PUSCH scheduled by DCI, for example.

x for a PUCCH may be determined based on DCI that schedules the PUSCH. For example, when a PUSCH is scheduled by a specific DCI format (for example, DCI format 0_1/0_2), x for the PUCCH may be 2. For example, when a PUSCH is scheduled by a DCI format other than a specific DCI format (for example, DCI format 0_1/0_2), x for the PUSCH may be 1.

According to the 0th embodiment above, the number of indicated TCI states to be applied to each channel/signal can be appropriately determined.

### <First Embodiment>

In the present embodiment, application of an indicated TCI state(s) will be described in detail.

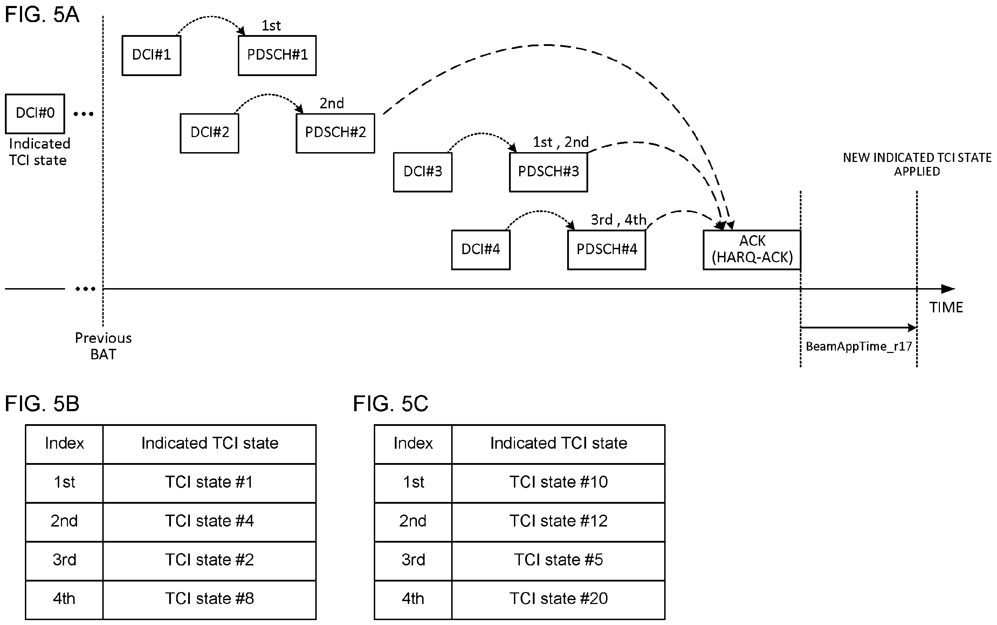

An overview of operation in the present embodiment will be described by using FIG. 5A to FIG. 5C.

FIG. 5A is a diagram to show an example of application of indicated TCI states according to the first embodiment.

A UE may first receive beam indication DCI. The UE may receive DCI for scheduling/triggering each channel/signal (scheduling/triggering DCI).

In the example shown in FIG. 5A, the UE first receives beam indication DCI (DCI #0). Subsequently, the UE receives DCI #1 to DCI #4, which are DCIs (scheduling DCIs) that schedule respective PDSCHs #1 to #4.

The beam indication DCI may indicate y indicated TCI states. The indicated TCI states may be identified by indices corresponding to the respective indicated TCI states.

For example, DCI #0 indicates four indicated TCI states, and the respective indicated TCI states are identified by first to fourth indices (see FIG. 5B).

After the elapse of a specific time from transmission of an HARQ-ACK corresponding to PDSCHs #1 to #4 (beam application time (BAT), time indicated by BeamAppTime_r17), the UE may update indicated TCI states indicated by new beam indication DCI (for example, see the correspondence shown in FIG. 5C).

The UE may judge which TCI state to apply among the indicated TCI states based on the beam indication DCI, based on a specific field included in scheduling DCI.

For example, the UE may be indicated with an index(es) related to one or a plurality of (for example, two) indicated TCI states, based on a specific field included in scheduling DCI.

When indices related to a plurality of indicated TCI states are indicated, the UE may judge at least one of TCI states to apply and the order of TCI states among the plurality of indicated TCI states thus indicated, based on a specific method.

The specific method will be described later in detail.

The example shown in FIG. 5A shows application of an indicated TCI state having a first index to PDSCH #1 by DCI #1, application of an indicated TCI state having a second index to PDSCH #2 by DCI #2, application of the indicated TCI state having the first index (first TCI state) and the indicated TCI state having the second index (second TCI state) to PDSCH #3 by DCI #3, and application of an indicated TCI state having a third index (first TCI state) and an indicated TCI state having a fourth index (second TCI state) to PDSCH #4 by DCI #4.

The specific method related to judgment of an indicated TCI state(s) to be applied to each channel/signal will be described below.

The UE may follow at least one of methods described in embodiments 1-1 to 1-4 below.

### <<Embodiment 1-1>>

A UE may judge at least one of a TCI state(s) to apply to each channel/signal and the order of TCI states, based on a specific field included in scheduling/triggering DCI.

The UE may select/determine x (one or a plurality of) TCI state(s) from y indicated TCI states, based on the specific field.

The specific field may be a new field defined in Rel. 18 or later versions.

In the present disclosure, scheduling/triggering DCI may be DCI that schedules a channel (for example, a PUSCH/PDSCH/PUCCH) or may be DCI that triggers a signal (for example, an SRS/CSI-RS). The scheduling/triggering DCI may be a specific DCI format (for example, DCI format 0_1/0_2/1_1/1_2).

The specific field may be a field indicating any of indices of the y indicated TCI states.

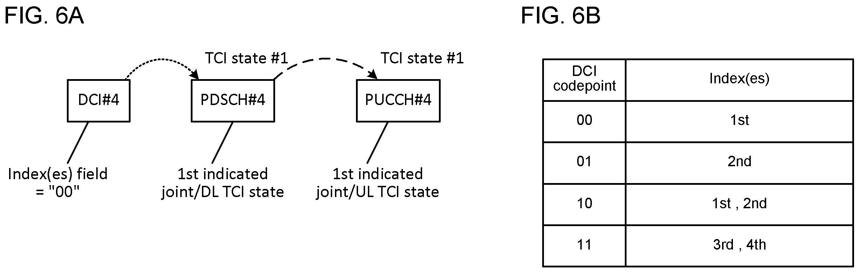

The correspondence between codepoints of a specific field and indices of indicated TCI states may be defined/configured/notified to the UE (see FIG. 6B). The UE may judge a TCI state(s) (index(es) of the indicated TCI state(s)) to apply to a scheduled/triggered channel/signal, based on the specific field and the correspondence.

The correspondence may be defined in a specification in advance, configured for/indicated to the UE by higher layer signaling (RRC/MAC CE), or indicated by specific DCI.

The specific DCI may be beam indication DCI, for example. The UE may be updated with an index corresponding to each codepoint of the specific field by beam indication DCI.

The specific field may have a specific number of bits (for example, two bits). The specific number of bits may be defined in a specification in advance or may be configured for the UE by higher layer signaling (RRC/MAC CE).

The UE may apply the indicated TCI state(s) corresponding to the index indicated by the specific field, to a channel (for example, a PDSCH/PUSCH/PUCCH)/signal (for example, a CSI-RS/TRS) corresponding to scheduling/triggering DCI.

FIG. 6A and FIG. 6B are diagrams to show an example of application of indicated TCI states according to embodiment 1-1. In the example shown in FIG. 6A, a UE is scheduled with PDSCH #4 and PUCCH #4 by scheduling DCI (DCI #4).

In the example shown in FIG. 6A, the UE is indicated with an index(es) of a TCI state(s) to be applied to a channel, by using a field included in scheduling DCI. In the example shown in FIG. 6B, the field indicates a codepoint "00."

The UE is indicated with a first index corresponding to the codepoint "00," based on the correspondence as that shown in FIG. 6B described above. The UE applies the indicated TCI state corresponding to the first index to PDSCH #4 and PUCCH #4. The example shown in FIG. 6B illustrates an example where TCI state #1, which is the indicated TCI state (joint/DL TCI state) having the first index, is applied to PDSCH #4 and TCI state #1, which is the indicated TCI state (joint/UL TCI state) having the first index, is applied to PUCCH #4.

Note that a DL channel/signal in the present embodiment is not limited to a PDSCH/RS scheduled/triggered by scheduling/triggering DCI. A DL channel/signal in the present embodiment may be any other PDSCH (for example, a PDSCH other than a scheduled PDSCH) or may be any other RS (for example, an RS other than a triggered RS).

A UL channel/signal in the present embodiment is not limited to a PUSCH/PUCCH/RS scheduled/triggered by scheduling/triggering DCI. A UL channel/signal in the present embodiment may be any other PUSCH/PUCCH (for example, a PUSCH/PUCCH other than a scheduled PUSCH/PUCCH) or may be any other RS (for example, RS other than a triggered RS).

### {Variation of Embodiment 1-1}

A specific field included in scheduling DCI may be one or more than one.

A UE may judge a TCI state(s) to apply to each channel/signal, based on a plurality of (for example, two) specific fields (here, assume a first field and a second field).

The UE may be indicated with a first index related to an indicated TCI state by a first field and indicated with a second index related to an indicated TCI state by a second field.

When one TCI state is to be applied to a channel/signal, the UE may judge the one TCI state, based on the first (or the second) field.

When a plurality of (for example, two) TCI states are to be applied to a channel/signal, the UE may judge the two TCI states, based on the first field and the second field.

The correspondence related to an index (first index) indicated by the first field and the correspondence related to an index (second index) indicated by the second field may be a common correspondence. The correspondence related to an index (first index) indicated by the first field and the correspondence related to an index (second index) indicated by the second field may be separate (different) correspondences.

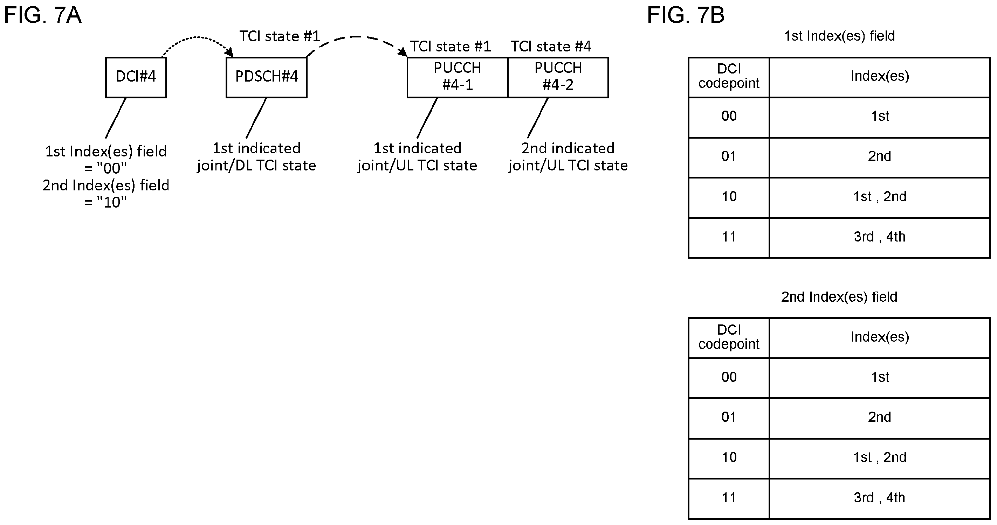

FIG. 7A and FIG. 7B are diagrams to show an example of application of indicated TCI states according to a variation of embodiment 1-1. In the example shown in FIG. 7A, a UE is scheduled with PDSCH #4 and PUCCHs #4 (PUCCH #4-1 and PUCCH #4-2) by scheduling DCI (DCI #4).

In the example shown in FIG. 7A, the UE is indicated with an index(es) of a TCI state(s) to be applied to a channel, by using a field included in scheduling DCI. In the example shown in FIG. 7A, a codepoint "00" is indicated by a field indicating a first index, and a codepoint "10" is indicated by a field indicating a second index.

The UE judges a TCI state(s) to apply, based on correspondences as those shown in FIG. 7B. The example shown in FIG. 7B illustrates a case where the correspondence related to the first index and the correspondence related to the second index are common.

In the example shown in FIG. 7A, one TCI state is applied to PDSCH #4. In this case, the UE applies the indicated TCI state corresponding to the first index indicated by the codepoint "00" (here, TCI state #1), to PDSCH #4.

In the example shown in FIG. 7B, two TCI states are applied to PUCCHs #4 (PUCCH #4-1 and PUCCH #4-2). In this case, the UE applies the indicated TCI states corresponding to the second index indicated by the codepoint "10" (here, TCI state #1 and TCI state #4) to PUCCHs #4 (each of PUCCH #4-1 and PUCCH #4-2).

Note that, in the present disclosure, a channel/signal to which a plurality of (for example, two) TCI states are applied may mean a channel/signal using multi-TRP.

Note that operation related to a DCI field indicating one or a plurality of indices as that illustrated in FIG. 7A and FIG. 7B above may be used for/applied to the UE only when multi-TRP PUCCH (repetition) is configured. When no multi-TRP PUCCH (repetition) is configured, the UE may assume that no DCI field indicating one or a plurality of indices is present.

In the present disclosure, when a plurality of indicated TCI states are indicated in a state where operation requiring one indicated TCI state (for example, single-TRP operation) is configured, the UE may determine one indicated TCI state from the plurality of indicated TCI states by using RRC/MAC CE/DCI (new DCI field).

The number of bits of the new DCI field may be determined based on the number (for example, y) of indicated TCI states thus indicated.

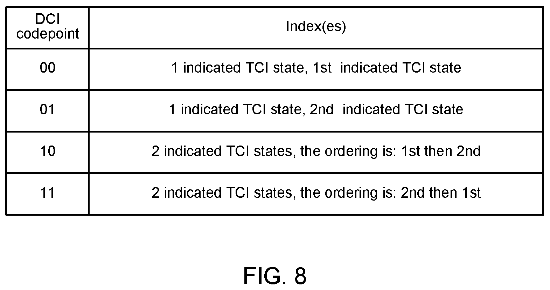

FIG. 8 is a diagram to show an example of information related to an indicated TCI state(s) indicated by scheduling DCI and the number/order of the indicated TCI states. The example shown in FIG. 8 illustrates correspondence of codepoints of a specific field included in scheduling DCI, indicated TCI states indicated by beam indication DCI, and the number/order of the indicated TCI states.

A UE may indicate one codepoint indicated in the correspondence, by using the specific field.

The example shown in FIG. 8 illustrates that a codepoint **"00"** indicates application of one indicated TCI state to a corresponding PDSCH and the TCI state to be applied is the first TCI state. Also illustrated is that a codepoint **"01"** indicates application of one indicated TCI state to a corresponding PDSCH and the TCI state to be applied is the second TCI state.

The example shown in FIG. 8 also illustrates that a codepoint "10" indicates application of two indicated TCI states to a corresponding PDSCH and the order of the TCI states to be applied first is the first TCI state first and then the second TCI state. Also illustrated is that a codepoint "11" indicates application of two indicated TCI states to a corresponding PDSCH and the order of the TCI states to be applied first is the second TCI state first and then the first TCI state.

For example, when the UE is indicated with the indicated TCI state having the first index and the indicated TCI state having the second index by a field (for example, a TCI field) of scheduling DCI and is indicated with application of one TCI state and application of the first TCI state (i.e., the codepoint "00" above) by a specific field of the scheduling DCI, the UE applies the indicated TCI state having the first index to a PDSCH corresponding to the scheduling DCI.

Note that the correspondence shown in FIG. 8 may be defined in a specification in advance or may be configured/updated for the UE by higher layer signaling (RRC/MAC CE).

### <<Embodiment 1-2>>

A UE may judge at least one of a TCI state(s) to apply to each channel/signal and the order of TCI states, based on a specific field included in scheduling/triggering DCI.

The UE may select/determine x (one or a plurality of) TCI state(s) from y indicated TCI states, based on the specific field.

The specific field may be an existing field (defined in Rel. 17 or earlier versions). The specific field may be a field obtained by enhancing an existing field (defined in Rel. 17 or earlier versions).

For a specific DL channel (for example, a PDSCH), a specific field included in DCI may be used for indication of x TCI state(s).

The UE may follow at least one of embodiments 1-2-1 and 1-2-2 below for determination of x TCI state(s) for the specific DL channel.

### {Embodiment 1-2-1}

A UE may determine an indicated TCI state(s) to apply to the specific DL channel (for example, a PDSCH), based on a specific field included in DCI.

The DCI may be DCI that schedules the specific channel (for example, DCI format 1_1/1_2), for example.

The DCI may be DCI other than beam indication DCI, for example.

The specific field may be an existing field (defined in Rel. 17 or earlier versions). The specific field may be a field obtained by enhancing an existing field (defined in Rel. 17 or earlier versions).

The specific field may be a field not used in operation of Rel. 17.

The specific field may be a TCI state (TCI) field, for example. The specific field may be a field other than a TCI state (TCI) field.

The UE may apply a TCI state(s) indicated by the specific field to the specific DL channel (for example, a PDSCH) and a UL channel (for example, a PUCCH) related to the specific DL channel.

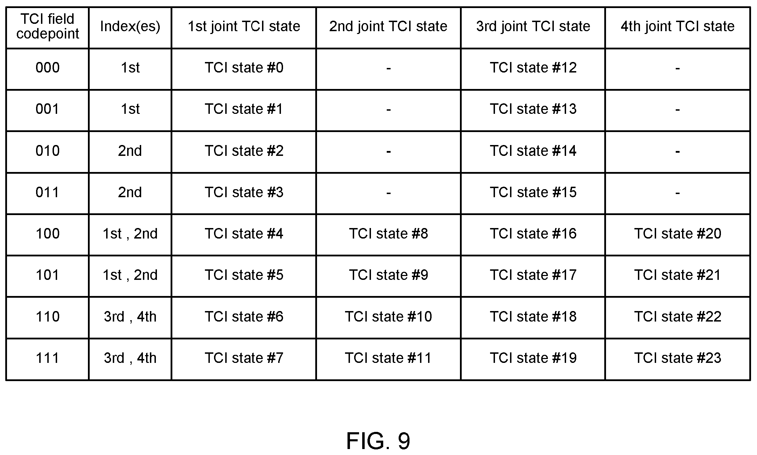

FIG. 9 is a diagram to show an example of indication of TCI states according to embodiment 1-2-1. In the example shown in FIG. 9, an index(es) of one or a plurality of (two) TCI states to be applied and at least one of first to fourth joint TCI states correspond to each codepoint of a TCI field in scheduling DCI.

In the example shown in FIG. 9, a UE judges an index(es) of a TCI state(s) to apply to a DL channel scheduled by scheduling DCI, based on an indicated TCI field. In this case, a TCI state(s) to be applied by the UE is an indicated TCI state(s) by currently applied beam indication DCI. In the example shown in FIG. 9, the UE does not apply the indicated TCI states (first to fourth joint TCI states) corresponding to a TCI field in scheduling DCI, to a scheduled DL channel.

Note that the indicated TCI states (first to fourth joint TCI states) corresponding to a TCI field in scheduling DCI may indicate TCI states to be applied after the elapse of BAT from transmission of a UL channel (HARQ-ACK) corresponding to DL channels scheduled by the scheduling DCI.

### {Embodiment 1-2-2}

A UE may determine an indicated TCI state(s) to apply to the specific DL channel (for example, a PDSCH), based on a specific field included in DCI.

The DCI may be specific DCI (for example, DCI format 1_1/1_2), for example.

The specific DCI may be DCI with DL assignment or DCI that schedules a DL channel (PDSCH). The specific DCI may be DCI without DL assignment or DCI that does not schedule a DL channel (PDSCH) .

The specific field may be an existing field (defined in Rel. 17 or earlier versions). The specific field may be a field obtained by enhancing an existing field (defined in Rel. 17 or earlier versions).

The UE may apply a TCI state(s) indicated by the specific field to the specific DL channel (for example, a PDSCH) and a UL channel (for example, a PUCCH) related to the specific DL channel.

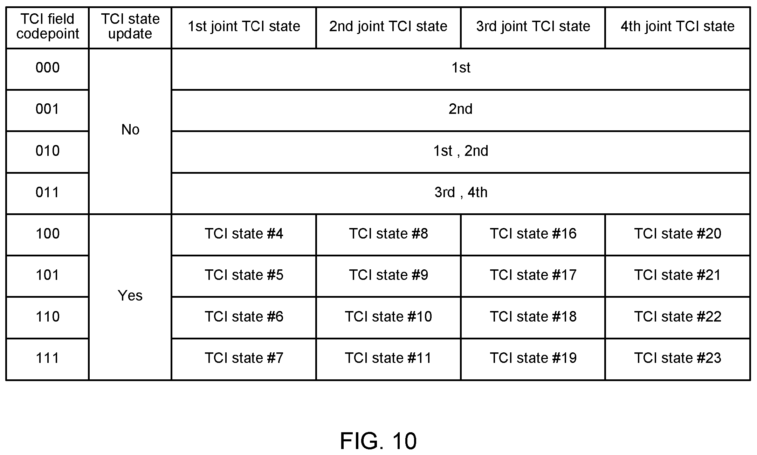

FIG. 10 is a diagram to show an example of indication of TCI states according to embodiment 1-2-2. In the example shown in FIG. 10, either an index(es) of one or a plurality of (two) TCI states to be applied or at least one of first to fourth joint TCI states correspond to each codepoint of a TCI field in scheduling DCI.

In the example shown in FIG. 10, a UE judges an index(es) of a TCI state(s) to apply to a DL channel scheduled by scheduling DCI, based on an indicated TCI field.

When the UE is indicated with a codepoint corresponding to an index(es) of one or a plurality of (two) TCI states (for example, any of codepoints "000" to "011" in FIG. 10), the UE applies, without updating indicated TCI states, the indicated TCI state(s) corresponding to the indicated index among a plurality of (y) indicated TCI states already indicated, to a channel/signal.

When the UE is indicated with a codepoint corresponding to at least one of the first to fourth joint TCI states (for example, any of codepoints "100" to "111" in FIG. 10), the UE may update the plurality of (y) indicated TCI states already indicated, to the indicated TCI states indicated by the codepoint.

Note that the correspondence illustrated in FIG. 10 may be configured for/indicated to the UE by using higher layer signaling (RRC/MAC CE). As illustrated in FIG. 10, the correspondence may include, but need not include, information (column) indicating presence/absence of update of TCI states.

Note that the correspondence illustrated in FIG. 10 may be correspondence related to DCI with DL assignment or DCI that schedules a DL channel (PDSCH), or correspondence related to DCI without DL assignment or DCI that does not schedule a DL channel (PDSCH) .

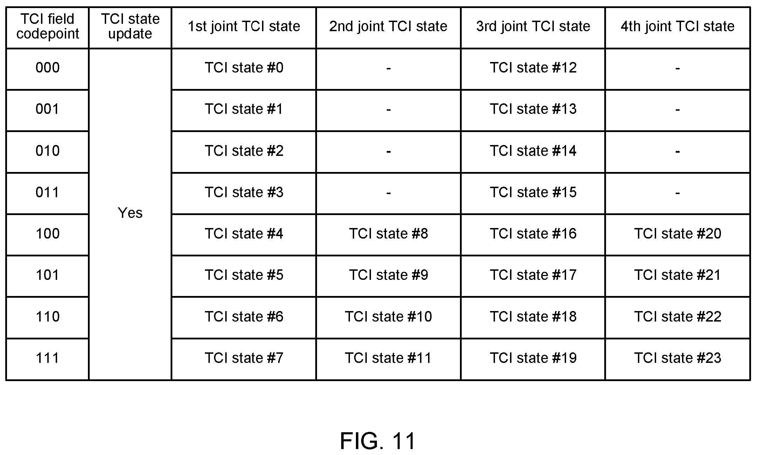

FIG. 11 is a diagram to show another example of the indication of TCI states according to embodiment 1-2-2. In the example shown in FIG. 11, any one of at least one of first to fourth joint TCI states corresponds to each codepoint of a TCI state in scheduling DCI.

In FIG. 11, compared with FIG. 10 described above, any one of at least one of first to fourth joint TCI states corresponds to all the codepoints of an indicated TCI field.

In this case, irrespective of a codepoint being indicated, the UE may update the plurality of (y) indicated TCI states already indicated, to the indicated TCI states indicated by the codepoint.

Note that the correspondence illustrated in FIG. 11 may be configured for/indicated to the UE by using higher layer signaling (RRC/MAC CE). As illustrated in FIG. 11, the correspondence may include, but need not include, information (column) indicating presence/absence of update of TCI states.

Note that the correspondence illustrated in FIG. 11 may be correspondence related to DCI without DL assignment or DCI that does not schedule a DL channel (PDSCH).

The correspondence illustrated in FIG. 11 may be used at least one of when no PDSCH is scheduled and when notification of the index(es) of a TCI state(s) to be applied for a PDSCH is not needed. Embodiment 1-2-1 described above or embodiment 1-3 to be described below may be applied to application of a TCI state(s) for a PUCCH of this case.

### <<Embodiment 1-3>>

A UE may judge at least one of a TCI state(s) to apply to each channel/signal and the order of TCI states, based on a specific field included in scheduling/triggering DCI.

The UE may select/determine x (one or a plurality of) TCI state(s) from y indicated TCI states, based on the specific field.

The specific field may be an existing field (defined in Rel. 17 or earlier versions). The specific field may be a field obtained by enhancing an existing field (defined in Rel. 17 or earlier versions).

The specific field may be at least one of a PRI field and a CCE index field, for example.

For a specific UL channel (for example, a PUCCH), a specific field included in DCI may be used for indication of x TCI state(s).

The index(es) corresponding to the x TCI states may be configured for/activated for/indicated to the UE for each PUCCH resource (resource group) by using higher layer signaling (RRC/MAC CE)/physical layer signaling (DCI) in advance.

For example, the UE may judge (x or y) TCI state(s) corresponding to each PUCCH resource (resource group), based on indication of a resource of a PUCCH by DCI.

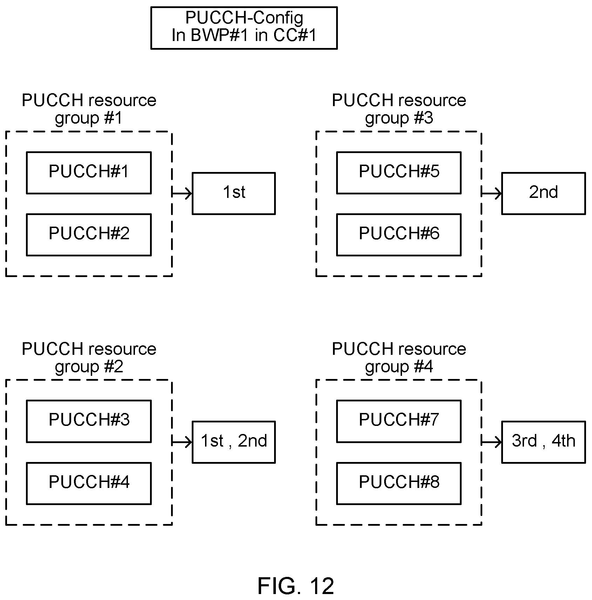

FIG. 12 is a diagram to show an example of indication of a TCI state(s) according to embodiment 1-3. In the example shown in FIG. 12, PUCCH resource groups (PUCCH resource groups #1 to #4) and PUCCH resources (PUCCH resources #1 to #8) are configured for a UE. Configuration of these PUCCH resources/resource sets may be performed by using a PUCCH configuration (PUCCH-Config) in a certain BWP (BWP #1) in a certain CC (CC #1). The correspondence between PUCCH resource groups and PUCCH resources is as shown in FIG. 12.

As shown in FIG. 12, an index is associated with each TCI state to be applied, for each PUCCH resource group. The UE judges x TCI states from y TCI states indicated by beam indication DCI, based on the associated index and a selected PUCCH resource (PRI/CCE index field).

In this way, by configuring/determining/indicating an index(es) of an indicated TCI state(s) on a per PUCCH resource/resource group, single-TRP operation and multi-TRP operation can be switched by (a PRI/CCE index field included in) scheduling DCI.

Configuration/indication/update of the index(es) of the indicated TCI state(s) on a per PUCCH resource/resource group may be performed by using higher layer signaling (RRC/MAC CE)/DCI (beam indication DCI).

A case where indicated a TCI state(s) is updated by beam indication DCI/MAC CE will be described below.

In embodiments 1-3-1 and 1-3-2 below, assumed is a case where one or a plurality of each of PUCCH resource #A associated (configured with) one indicated TCI state and PUCCH resource #B associated (configured) with a plurality of (for example, two) indicated TCI states are configured for a UE by using higher layer signaling (RRC).

### {Embodiment 1-3-1}

A UE may be indicated that a unified TCI state (indicated TCI state) is updated to one TCI state (indicated TCI state) by beam indication DCI/MAC CE.

The UE may perform update for PUCCH resource #A to one new indicated TCI state.

The UE may perform update to one new indicated TCI state, for PUCCH resource #B (option 1-3-1-1). In other words, the UE may update all of the plurality of (for example, two) indicated TCI states related to PUCCH resource #B to one new indicated TCI state.

The UE need not perform update to one new indicated TCI state, for PUCCH resource #B (option 1-3-1-2). The UE may ignore indication of update to one indicated TCI state, for PUCCH resource #B. For PUCCH resource #B related to a plurality of (for example, two) indicated TCI states, the TCI states need not be updated by beam indication DCI/MAC CE indicating one TCI state.

The UE may update at least one (part) of TCI states related to PUCCH resource #B to one new indicated TCI state (option 1-3-1-3). For example, when a first TCI state and a second TCI state are related to a PUCCH resource, the UE may judge to update any of the first TCI state and the second TCI state to one new indicated TCI state.

In option 1-3-1-3, an updated TCI state (for example, the first TCI state or the second TCI state) may be defined in a specification in advance or may be configured for the UE by higher layer signaling (RRC/MAC CE).

### {Embodiment 1-3-2}

A UE may be indicated that a unified TCI state (indicated TCI state) is updated to a plurality of (for example, two) TCI states (indicated TCI states) by beam indication DCI/MAC CE.

The UE may perform update to a plurality of (for example, two) new indicated TCI states, for PUCCH resource #A (option 1-3-2-1).

The UE need not perform update to a plurality of (for example, two) new indicated TCI states, for PUCCH resource #A (option 1-3-2-2). The UE may ignore indication of update to a plurality of (for example, two) indicated TCI states, for PUCCH resource #A. For PUCCH resource #A related to one indicated TCI state, the TCI state need not be updated by beam indication DCI/MAC CE indicating a plurality of (for example, two) TCI states.

The UE may perform update to any one of a plurality of (for example, two) new indicated TCI states, for one TCI state related to PUCCH resource #A (option 1-3-2-3). For example, when update to a first TCI state and a second TCI state is indicated by beam indication DCI/MAC CE, the UE may judge to update one TCI state related to PUCCH resource #A to any of the first TCI state and the second TCI state.

In option 1-3-2-3, a TCI state (for example, the first TCI state or the second TCI state) to be used for update may be defined in a specification in advance or may be configured for the UE by higher layer signaling (RRC/MAC CE).

The UE may perform update for PUCCH resource #B to a plurality of (for example, two) new indicated TCI states.

In embodiment 1-3-1/1-3-2 above, the UE may select one TCI state from a plurality of (for example, two) TCI states, based on a specific method.

The specific method may be defined in a specification in advance, for example. For example, the UE may select a first (or a second/last) TCI state from a plurality of (for example, two) TCI states. For example, the UE may select a TCI state having the lowest (or highest) index from the plurality of (for example, two) TCI states.

The specific method may be a method based on correspondence between TCI states/PUCCHs and indices related to TRPs (for example, CORESET pool indices/TRP IDs/TRP indices), for example. The UE may judge which TCI state to update, based on a TRP related to a TCI state/PUCCH.

The UE may configure association between PUCCH resources (resource groups) and indices related to TRPs. If an index(es) related to a TRP is associated with an indicated TCI state (for example, when at least one of the first/second TCI state and a CORESET pool index is associated with beam indication DCI), the UE may judge to update a TCI state(s) associated with the index(es) related to the TRP for each PUCCH resource (resource group).

### <<Embodiment 1-4>>

A UE may judge at least one of a TCI state(s) to apply to each channel/signal and the order of TCI states, based on a specific field included in scheduling/triggering DCI.

The UE may select/determine x (one or a plurality of) TCI state(s) from y indicated TCI states, based on the specific field.

The specific field may be at least one of an existing field (defined in Rel. 17 or earlier versions) (or a field obtained by enhancing such an existing field) and a field newly defined (Rel. 18 or later versions).

The existing field may be an SRS resource set indicator field, for example. The existing field may be a field other than an SRS resource set indicator field, for example.

For a specific UL channel (for example, a PUSCH), a specific field included in DCI may be used for indication of x TCI state(s).

### {Embodiment 1-4-1}

When a plurality of (for example, two) SRS resource sets with a specific usage (for example, codebook/non-codebook) are configured, a UE may be indicated with the index(es) of an indicated TCI state(s) to be applied to a channel (for example, a PUSCH) by using a specific field (for example, an SRS resource set indicator field).

In this case, the UE may judge whether to perform repetition of a PUSCH using a single TRP and repetition of a PUSCH using multi-TRP, based on a specific field (for example, an SRS resource set indicator field).

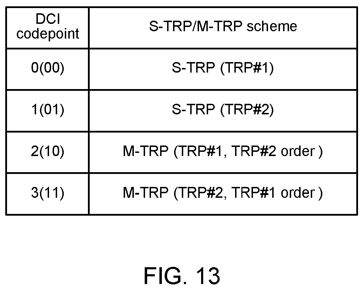

FIG. 13 is a diagram to show examples of a field in DCI according to embodiment 1-4. The example shown in FIG. 13 illustrates association between codepoints of an SRS resource set indicator field and single-TRP/multi-TRP schemes.

For example, when the UE is indicated with a codepoint "0 (00)" of the SRS resource set indicator field, the UE judges that single-TRP operation using a first TRP (TRP #1) is indicated.

For example, when the UE is indicated with a codepoint "1 (01)" of the SRS resource set indicator field, the UE judges that single-TRP operation using a second TRP (TRP #2) is indicated.

For example, when the UE is indicated with a codepoint "2 (10)" of the SRS resource set indicator field, the UE judges that multi-TRP operation using the first TRP (TRP #1) and the second TRP (TRP #2) is indicated. In this case, the UE judges that application of the first TCI state to a channel related to the first TRP and the second TCI state to a channel related to the second TRP is indicated.

For example, when the UE is indicated with a codepoint "3 (11)" of the SRS resource set indicator field, the UE judges that multi-TRP operation using the first TRP (TRP #1) and the second TRP (TRP #2) is indicated. In this case, the UE judges that application of the first TCI state to the channel related to the second TRP and the second TCI state to the channel related to the first TRP is indicated.

Note that the first TRP may correspond to a first (Rel-17) CB/NCB SRS resource set. In Rel. 18 or later versions, a UE may judge the first TRP to be in the first TCI state. The second TRP may correspond to a second (Rel-17) CB/NCB SRS resource set. In Rel. 18 or later versions, the UE may judge the second TRP to be in the second TCI state.

### {Embodiment 1-4-2}

A specific field for selecting/determining x (one or a plurality of) TCI state(s) from y indicated TCI states may be a field described in embodiment 1-1 above.

In other words, embodiment 1-1 above may be used for selection/determination of a TCI state(s) to be applied to a specific UL channel (for example, a PUSCH).

For example, the specific field described in embodiment 1-1 above may indicate one or a plurality of indices. Operation related to a DCI field indicating one or a plurality of indices may be used/applied for a UE only when multi-TRP PUSCH repetition (two SRS resource sets with a usage of CB/NCB) is configured. When no multi-TRP PUSCH repetition is configured (two SRS resource sets with a usage of CB/NCB are not configured), the UE may assume that no DCI field indicating one or a plurality of indices is present.

Note that embodiments 1-4-1 and 1-4-2 described above may be used in combination or may be used individually.

For example, which of embodiments 1-4-1 and 1-4-2 described above to use may be configured for the UE by using higher layer signaling (RRC/MAC CE).

According to the first embodiment above, an indicated TCI state(s) to be applied to each channel/signal can be appropriately determined, and also single-TRP operation and multi-TRP operation can be switched by DCI, based on the number of TCI states to be applied.

### <Variations>

In each embodiment of the present disclosure, a field related to an index(es) related to a TCI state(s) to be applied to each channel/signal need not be included in a specific DCI format.

The specific DCI format may be DCI format that schedules a PUSCH (for example, DCI format 0_0/0_1), for example.

When no field related to the index(es) is included in the specific DCI format, the UE may derive an index(es) of a TCI state(s) to apply to a channel/signal scheduled/triggered by the specific DCI format, based on a field related to the index(es) indicated by a DCI format other than the specific DCI format.

When no field related to the index(es) is included in the specific DCI format, the UE may determine an index(es) of a TCI state(s) to apply to a channel/signal scheduled/triggered by the specific DCI format, by using an index defined in advance (for example, the lowest (first)/highest index) or a configuration by higher layer signaling (RRC/MAC CE).

### <Supplements>

### {Notification of Information to UE}

Notification of any information to a UE (from a network (NW) (for example, a base station (BS))) (in other words, reception of any information in the UE from the BS) may be performed by using physical layer signaling (for example, DCI), higher layer signaling (for example, RRC signaling, MAC CE), or a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits included in the DCI, the format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information in the UE to the BS) in the above-described embodiments may be performed by using physical layer signaling (for example, UCI), higher layer signaling (for example, RRC signaling, MAC CE), or a specific signal/channel (for example, a PUCCH, a PUSCH, a PRACH, a reference signal), or a combination of these.

When the notification is performed by a MAC CE, the MAC CE may be identified by a new LCID not defined in an existing standard being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied when a specific condition is satisfied. The specific condition may be defined in a standard, or the UE/BS may be notified of the condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information (for example, switching of single-TRP and multi-TRP operations using a unified TCI state) for at least one of the embodiments above
- supporting of notification of an index(es) of an indicated TCI state(s) to be applied to each channel/signal, by DCI
- a supported number corresponding to at least one of y and x

The specific UE capability may be a capability applied over all the frequencies (in common irrespective of frequency), a capability for each frequency (for example, one of or a combination of cell, band, band combination, BWP, component carrier, and the like), a capability for each frequency range (for example, Frequency Range 1 (FR1), FR2, FR3, FR4, FR5, FR2-1, and FR2-2), a capability for each subcarrier spacing (SCS), or a capability for each Feature Set (FS) or Feature Set Per Component-carrier (FSPC).

The specific UE capability may be a capability applied for all duplex schemes (in common irrespective of duplex scheme) or a capability for each duplex scheme (for example, time division duplex (TDD), frequency division duplex (FDD)).

At least one of the above-described embodiments may be applied when specific information related to the above-described embodiment (or carrying out the operation of the above-described embodiment) is configured/activated/triggered for a UE by higher layer signaling/physical layer signaling. For example, the specific information may be information indicating enabling of switching of single-TRP and multi-TRP operations using a unified TCI state, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Note A)

Regarding one embodiment of the present disclosure, the following supplementary notes of the invention will be given.

### {Supplementary Note A-1}

A terminal including:
a receiving section that receives first downlink control information (DCI) to be used for beam indication and second DCI to schedule or trigger a downlink (DL) signal; and
a control section that judges one or a plurality of TCI states to apply to the DL signal from a plurality of Transmission Configuration Indication (TCI) states indicated by the first DCI and judges whether the DL signal is a signal to use one transmission/reception point (TRP) or a signal to use a plurality of TRPs, based on a specific field included in the second DCI.

### {Supplementary Note A-2}

The terminal according to supplementary note A-1, wherein
when one TCI state is indicated by the specific field, the control section judges that the DL signal is the signal to use one transmission/reception point, and
when a plurality of TCI states are indicated by the specific field, the control section judges that the DL signal is the signal to use a plurality of transmission/reception points.

### {Supplementary Note A-3}

The terminal according to supplementary note A-1 or A-2, wherein the specific field indicates at least one of the number of the one or plurality of TCI states to be applied to the DL signal and an order of the one or plurality of TCI states to be applied to the DL signal.

### {Supplementary Note A-4}

The terminal according to any one of supplementary notes A-1 to A-3, wherein the DL signal is a physical downlink shared channel (PDSCH), and the control section judges a TCI state to apply to a physical uplink control channel corresponding to the PDSCH, based on specific fields of the first DCI and the second DCI.

### (Supplementary Note B)

Regarding one embodiment of the present disclosure, the following supplementary notes of the invention will be given.

### {Supplementary Note B-1}

A terminal including:
a receiving section that receives first downlink control information (DCI) to be used for beam indication and second DCI to schedule or trigger an uplink (UL) signal; and
a control section that judges one or a plurality of TCI states to apply to the UL signal from a plurality of Transmission Configuration Indication (TCI) states indicated by the first DCI and judges whether the UL signal is a signal to use one transmission/reception point (TRP) or a signal to use a plurality of TRPs, based on a specific field included in the second DCI.

### {Supplementary Note B-2}

The terminal according to supplementary note B-1, wherein
when one TCI state is indicated by the specific field, the control section judges that the UL signal is the signal to use one transmission/reception point, and
when a plurality of TCI states are indicated by the specific field, the control section judges that the UL signal is the signal to use a plurality of transmission/reception points.

### {Supplementary Note B-3}

The terminal according to supplementary note B-1 or B-2, wherein the specific field indicates at least one of the number of the one or plurality of TCI states to be applied to the UL signal and an order of the one or plurality of TCI states to be applied to the UL signal.

### {Supplementary Note B-4}

The terminal according to any one of supplementary notes B-1 to B-3**,** wherein the UL signal is a physical uplink control channel (PUCCH), and the control section further judges one or a plurality of TCI states to apply to the PUCCH, based on an index configured for each PUCCH resource or PUCCH resource group.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

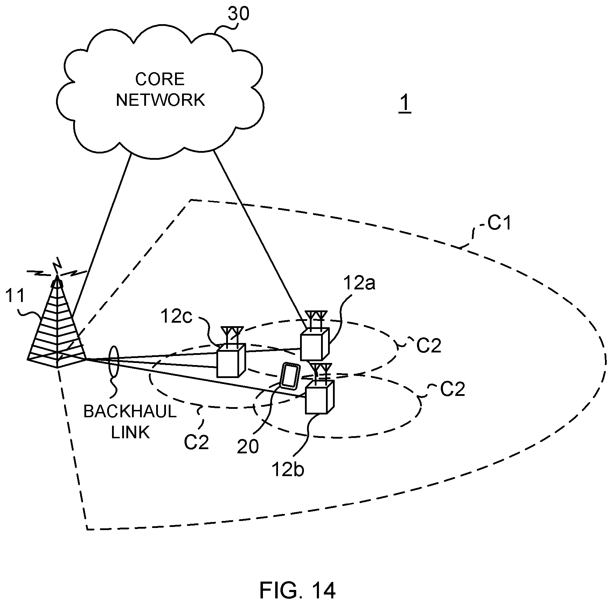

FIG. 14 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR), and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UFM), Application Function (AF), Data Network (DN), Location Management Function (LMF), and operation, administration and maintenance (management) (OAM), for example. Note that a plurality of functions may be provided by one network node. Communication with an external network (for example, the Internet) may be performed via DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be used interchangeably with "DL data", and the PUSCH may be used interchangeably with "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

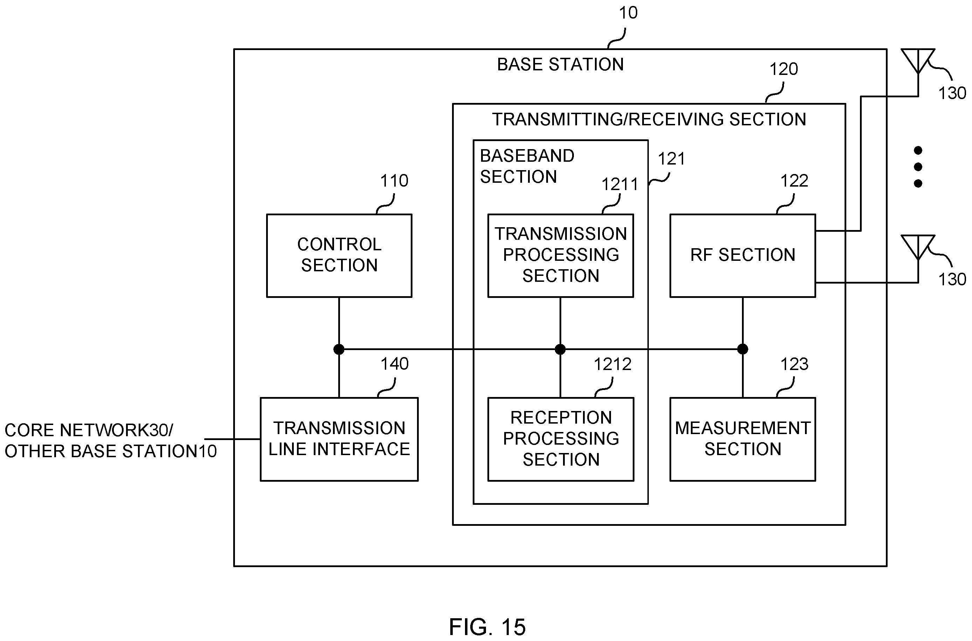

FIG. 15 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit first downlink control information (DCI) to be used for beam indication and second DCI to schedule or trigger a downlink (DL) signal. The control section 110 may indicate one or a plurality of TCI states to apply to the DL signal from a plurality of Transmission Configuration Indication (TCI) states indicated by the first DCI and indicate whether the DL signal is a signal to use one transmission/reception point (TRP) or a signal to use a plurality of TRPs, by using a specific field included in the second DCI (0th and first embodiments).

The transmitting/receiving section 120 may transmit first downlink control information (DCI) to be used for beam indication and second DCI to schedule or trigger an uplink (UL) signal. The control section 110 may indicate one or a plurality of TCI states to apply to the UL signal from a plurality of Transmission Configuration Indication (TCI) states indicated by the first DCI and indicate whether the UL signal is a signal to use one transmission/reception point (TRP) or a signal to use a plurality of TRPs, by using a specific field included in the second DCI (0th and first embodiments).

### (User Terminal)

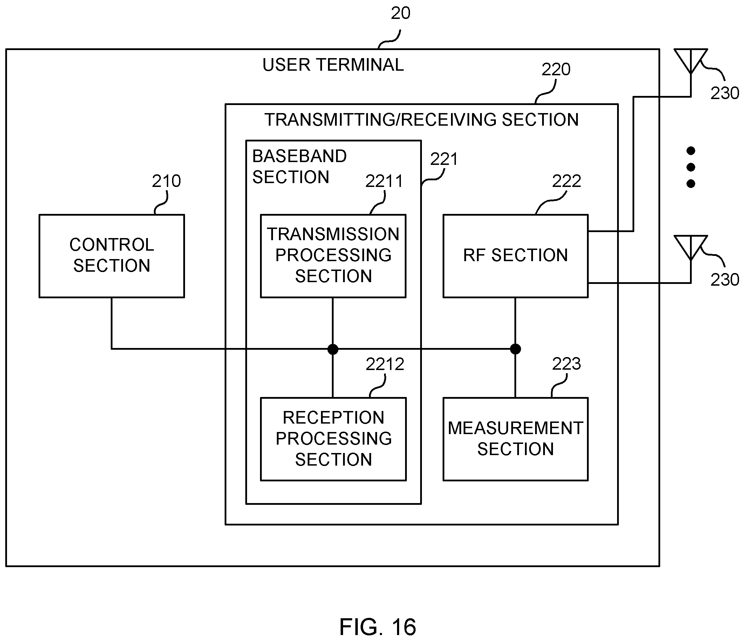

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive first downlink control information (DCI) to be used for beam indication and second DCI to schedule or trigger a downlink (DL) signal. The control section 210 may judge one or a plurality of TCI states to apply to the DL signal from a plurality of Transmission Configuration Indication (TCI) states indicated by the first DCI and judge whether the DL signal is a signal to use one transmission/reception point (TRP) or a signal to use a plurality of TRPs, based on a specific field included in the second DCI (0th and first embodiments).

When one TCI state is indicated by the specific field, the control section 210 may judge that the DL signal is the signal to use one transmission/reception point. When a plurality of TCI states are indicated by the specific field, the control section 210 may judge that the DL signal is the signal to use a plurality of transmission/reception points (0th and first embodiments).

The specific field may indicate at least one of the number of the one or plurality of TCI states to be applied to the DL signal and an order of the one or plurality of TCI states to be applied to the DL signal (first embodiment).

The DL signal may be a physical downlink shared channel (PDSCH). The control section 210 may judge a TCI state to apply to a physical uplink control channel corresponding to the PDSCH, based on specific fields of the first DCI and the second DCI (first embodiment).

The transmitting/receiving section 220 may receive first downlink control information (DCI) to be used for beam indication and second DCI to schedule or trigger an uplink (UL) signal. The control section 210 may judge one or a plurality of TCI states to apply to the UL signal from a plurality of Transmission Configuration Indication (TCI) states indicated by the first DCI and judge whether the UL signal is a signal to use one transmission/reception point (TRP) or a signal to use a plurality of TRPs, based on a specific field included in the second DCI (0th and first embodiments).

When one TCI state is indicated by the specific field, the control section 210 may judge that the UL signal is the signal to use one transmission/reception point. When a plurality of TCI states are indicated by the specific field, the control section 210 may judge that the UL signal is the signal to use a plurality of transmission/reception points (0th and first embodiments).

The specific field may indicate at least one of the number of the one or plurality of TCI states to be applied to the UL signal and an order of the one or plurality of TCI states to be applied to the UL signal (first embodiment).

The UL signal may be a physical uplink control channel (PUCCH). The control section 210 may further judge one or a plurality of TCI states to apply to the PUCCH, based on an index configured for each PUCCH resource or PUCCH resource group (first embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

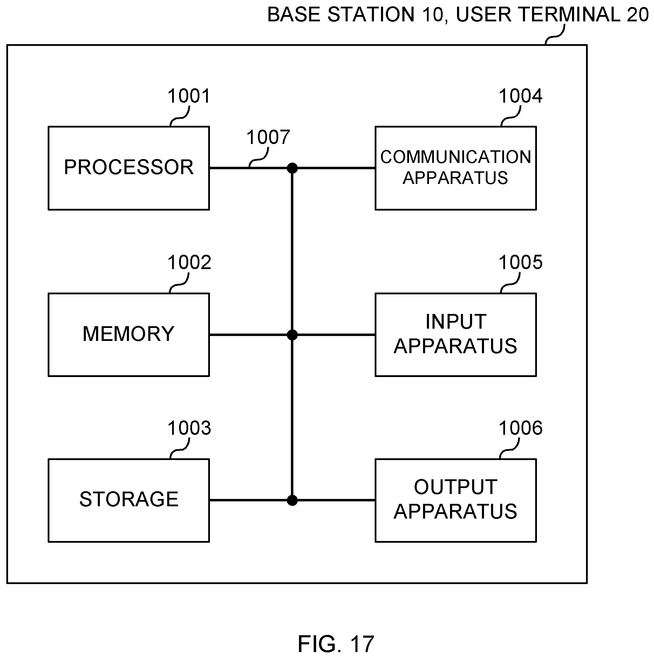

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be used interchangeably with a TTI having a time length exceeding 1 ms, and a short TTI (for example, a shortened TTI and so on) may be used interchangeably with a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be used interchangeably with instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

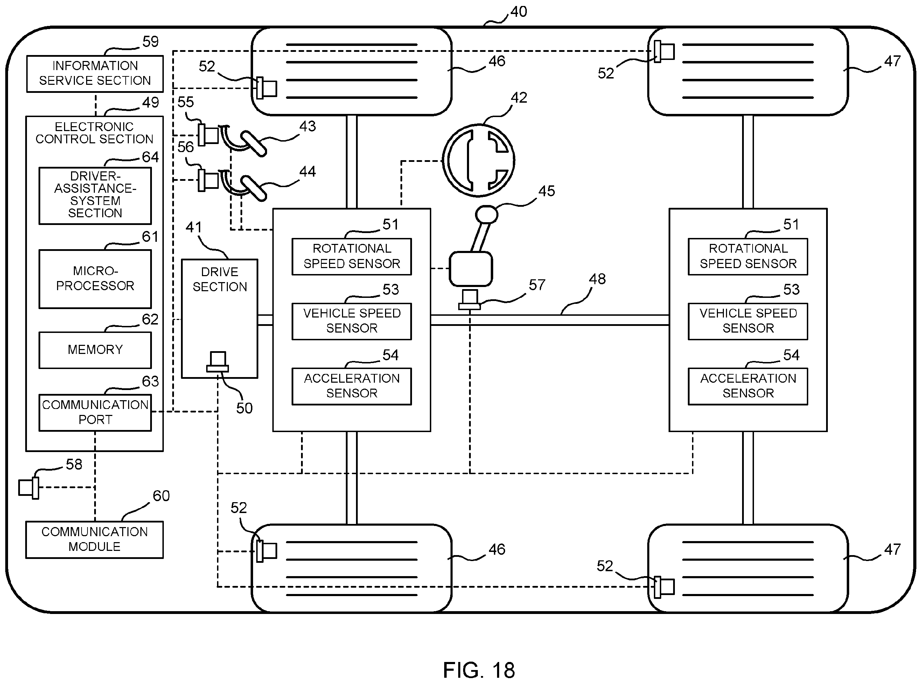

FIG. 18 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the drive section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be used interchangeably with a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be used interchangeably with the words corresponding to the terminal-to-terminal communication (for example, "sidelink"). For example, an uplink channel, a downlink channel and so on may be used interchangeably with a sidelink channel.

Likewise, the user terminal in the present disclosure may be used interchangeably with a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be used interchangeably with "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives first downlink control information (DCI) to be used for beam indication and second DCI to schedule or trigger a downlink (DL) signal; and
a control section that judges one or a plurality of TCI states to apply to the DL signal from a plurality of Transmission Configuration Indication (TCI) states indicated by the first DCI and judges whether the DL signal is a signal to use one transmission/reception point (TRP) or a signal to use a plurality of TRPs, based on a specific field included in the second DCI.

2. The terminal according to claim 1, wherein
when the one TCI state is indicated by the specific field, the control section judges that the DL signal is the signal to use the one transmission/reception point, and
when the plurality of TCI states are indicated by the specific field, the control section judges that the DL signal is the signal to use the plurality of transmission/reception points.

3. The terminal according to claim 1, wherein the specific field indicates at least one of the number of the one or plurality of TCI states to apply to the DL signal and an order of the one or plurality of TCI states to apply to the DL signal.

4. The terminal according to claim 1, wherein
the DL signal is a physical downlink shared channel (PDSCH), and
the control section judges a TCI state to apply to a physical uplink control channel corresponding to the PDSCH, based on specific fields of the first DCI and the second DCI.

5. A radio communication method for a terminal, the radio communication method comprising:
receiving first downlink control information (DCI) to be used for beam indication and second DCI to schedule or trigger a downlink (DL) signal; and
judging one or a plurality of TCI states to apply to the DL signal from a plurality of Transmission Configuration Indication (TCI) states indicated by the first DCI and judging whether the DL signal is a signal to use one transmission/reception point (TRP) or a signal to use a plurality of TRPs, based on a specific field included in the second DCI.

6. A base station comprising:
a transmitting section that transmits first downlink control information (DCI) to be used for beam indication and second DCI to schedule or trigger a downlink (DL) signal; and
a control section that indicates one or a plurality of TCI states to apply to the DL signal from a plurality of Transmission Configuration Indication (TCI) states indicated by the first DCI and indicates whether the DL signal is a signal to use one transmission/reception point (TRP) or a signal to use a plurality of TRPs, by using a specific field included in the second DCI.
